(19) Europäisches Patentamt
European Patent Office
Office européen des brevets

(11) EP 4 206 840 B1

(12) **EUROPEAN PATENT SPECIFICATION**

(45) Date of publication and mention of the grant of the patent:
**05.03.2025 Bulletin 2025/10**

(21) Application number: **22203023.1**

(22) Date of filing: **21.10.2022**

(51) International Patent Classification (IPC):
***G05B 23/02*** *(2006.01)* ***B26D 1/00*** *(2006.01)*

(52) Cooperative Patent Classification (CPC):
**G05B 23/0224; B26D 5/00;** B26D 1/12

(54) **METHODS AND SYSTEMS FOR REAL TIME ESTIMATION OF PRESSURE CHANGE REQUIREMENTS FOR ROTARY CUTTERS**

VERFAHREN UND SYSTEME ZUR ECHTZEITSCHÄTZUNG VON DRUCKÄNDERUNGSANFORDERUNGEN FÜR ROTATIONSSCHNEIDER

PROCÉDÉS ET SYSTÈMES D’ESTIMATION EN TEMPS RÉEL DES EXIGENCES DE CHANGEMENT DE PRESSION POUR DISPOSITIFS DE COUPE ROTATIFS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.12.2021 IN 202121062051**

(43) Date of publication of application:
**05.07.2023 Bulletin 2023/27**

(73) Proprietor: **Tata Consultancy Services Limited**
**Maharashtra (IN)**

(72) Inventors:
- **SAURABH JAYWANT, Desai**
  **411013 Pune, Maharashtra (IN)**
- **SHASHANK, Agarwal**
  **411013 Pune, Maharashtra (IN)**
- **VENKATARAMANA, Runkana**
  **411013 Pune, Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**US-A1- 2018 085 877** **US-B1- 6 418 828**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 206 840 B1

## Description

CROSS-REFERENCE TO RELATED APPLICATIONS AND PRIORITY

The present application claims priority to Indian application no. 202121062051, filed on December 31, 2021.

TECHNICAL FIELD

The disclosure herein generally relates to optimal utilization of rotary cutters, and, more particularly, to methods and systems for real time estimation of pressure change requirements for rotary cutters.

BACKGROUND

Rotary knifes/cutters plays an important role in the continuous manufacturing of finished products like diapers, sanitary pads, etc. They require periodic maintenance and need to be changed at regular intervals. Generally, the rotary cutters work in a very specific manner and are supported by a cylinder that imparts vertical force on the rotary knives, thus enabling them to optimally rest/touch the surface beneath where a free rotating anvil lies. The rotary cutters tend to lose their cutting material and sharpness over time due to usage. Hence to compensate for the same, pressure applied by the cylinder needs to be changed / increased manually. But this change / increase in pressure needs to be optimum as too high pressure can lead to loss of cutting material and too low pressure can stop the desired cutting operation.

However, as this pressure change requirement for cylinders is usually decided based on human judgement, it leads to some unplanned and sudden stoppage of the machine thus leading to wastage of operational time as well as the material. Further, as the pressure change is handled manually by human operators, it becomes necessary for the operators to have a good understanding of the pressure change requirement as the amount of pressure change at any step can have a great impact on the rotary cutter life, thereby putting stress on the operators to accurately handle/decide the pressure change requirement and the change in pressure.

Additionally, even though the operator may have a good understanding of the pressure change requirement, a manual operation sometimes lacks the exact update owing to pressure measurement and the update being analog in nature.

US 2018/085877 shows manually adjusting the cutting force of a rotary cutter to maintain the quality of the cut even with loss of sharpness over time due to usage.

US 6 418 828 shows measuring wear of a cutting tool and comparing the measured tool wear with a model based predicted tool wear and informing a user of a deviation.

SUMMARY

Embodiments of the present disclosure present technological improvements as solutions to one or more of the above-mentioned technical problems recognized by the inventors in conventional systems. For example, in one aspect, there is provided a processor implemented method for real time estimation of pressure change requirements for rotary cutters according to claim 1.

In another aspect, there is provided a pressure change requirement estimation system for real time estimation of pressure change requirements for rotary cutters according to claim 7.

In yet another aspect, there are provided one or more non-transitory machine-readable information storage mediums comprising one or more instructions which when executed by one or more hardware processors cause a method for real time estimation of pressure change requirements for rotary cutters according to claim 13.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an example representation of an environment, related to at least some example embodiments of the present disclosure.

FIG. 2 illustrates an exemplary block diagram of a pressure change requirement estimation system for real time estimation of pressure change requirements for rotary cutters, in accordance with an embodiment of the present disclosure.

FIG. 3A illustrates a schematic block diagram representation of a first trained model associated with the system of FIG. 2 or the PCRES of FIG. 1 for real time estimation of pressure change requirements for rotary cutters, in accordance with an embodiment of the present disclosure.

FIG. 3B illustrates a schematic block diagram representation of a second trained model associated with the system of FIG. 2 or the PCRES of FIG. 1 for real time estimation of pressure change requirements for rotary cutters, in accordance with an embodiment of the present disclosure.

FIG. 4 illustrates an exemplary flow diagram of a method for real time estimation of pressure change requirements for rotary cutters, in accordance with an embodiment of the present disclosure.

FIG. 5 illustrates an example representation of comparison of the real-time rotary cutter usage data with historical data associated with two rotary cutters for pressure change detection, in accordance with an embodiment of the present disclosure.

FIG. 6 illustrates an example graphical representation of a polygon created for the rotary cutter, in accordance with an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The manufacturing industry, especially consumer packaged goods (CPG) industry is heavily dependent on rotary cutters. As discussed previously, rotary cutters tend to lose material and sharpness over its usage cycle. So, to make it work for a longer time, a cylinder is used to impart vertical force. The force (pressure) that is to be applied to the rotary cutters is usually measured using an analog scale and is changed manually by an operator based on his/her experience. Most of the times, the pressure change is made once the machine stops automatically as the rotary cutter cannot complete the cutting operation, thereby leading to wastage of operational time as well as the material which has to be discarded. Moreover, because of inefficient utilization of the rotary cutter, the rotary cutter loses its cutting efficiency early which further leads to increase in cost as the rotary cutter needs to be changed frequently for proper functioning of the machine.

Further, the systems that are available in the prior art for prolonging the life of rotary cutters works towards minimizing wear and tear losses during cutting process and wear and tear of the die used in the cutting process. However, handling the pressure change which is one of the important aspects is still not well handled by the systems available in the prior art.

Embodiments of the present disclosure overcome the above-mentioned disadvantages, like inefficient utilization, wastage of operational time and material, etc., by providing methods and systems for real time estimation of pressure change requirements for rotary cutters. More specifically, a pressure change requirement estimation system (also referred as system and interchangeably used herein) is provided by the present disclosure that uses a dual step prediction methodology to identify the pressure change requirement while considering both time of usage as well as physics-based signals. Once the pressure change requirement is identified, the system automatically verifies and calculates the exact pressure change requirement, thereby guiding the system to automatically update the pressure applied on the rotary cutters in real-time. Basically, the system automatically predicts the next rotary cutter pressure change time based on historical rotary cutter usage data and physical parameters of the rotary cutter and alerts a user/operator of the machine to change the pressure when it is due, thereby mitigating the need for human judgement that further helps in ensuring optimal utilization of the rotary cutters and higher productivity of the machine while reducing the wastage of the operational time and the material.

Referring now to the drawings, and more particularly to FIGS. 1 through 6, where similar reference characters denote corresponding features consistently throughout the figures, there are shown preferred embodiments and these embodiments are described in the context of the following exemplary system and/or method.

FIG. 1 illustrates an exemplary representation of an environment 100 related to at least some example embodiments of the present disclosure. Although the environment 100 is presented in one arrangement, other embodiments may include the parts of the environment 100 (or other parts) arranged otherwise depending on, for example, time for a next pressure change estimation, next pressure value estimation, etc. The environment 100 generally includes a machine 102 comprising a rotary cutter and a pressure change requirement estimation system (PCRES) 106, each coupled to, and in communication with (and/or with access to) a network 104.

The network 104 may include, without limitation, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, a virtual network, and/or another suitable public and/or private network capable of supporting communication among two or more of the parts or users illustrated in FIG. 1, or any combination thereof.

Various entities in the environment 100 may connect to the network 104 in accordance with various wired and wireless communication protocols, such as Transmission Control Protocol and Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, or any combination thereof.

The machine 102 is a mechanical structure used in an industry to produce a particular product, such as sanitary pad, diaper etc. In an embodiment, the machine 102 includes a rotary unit in which a rotary cutter is embedded as per the specific usage requirement. The rotary unit further includes a rotary cutter unit 102a, an anvil 102b, and a cylinder 102c. The rotary cutter unit 102a is powered by an external drive motor and is configured to cut input raw material using the rotary cutter to produce the required product. The anvil 102b is a free rotating component where the rotary cutter unit 102a rest while performing its desired operation. The cutting inertia generated by the rotary cutter unit 102a while performing the operation makes the anvil 102b to rotate along with the rotary cutter unit 102a. The cylinder 102c is configured to impart vertical force/pressure onto the rotary cutter in an orthogonal direction of its operation.

The pressure change requirement estimation system (PCRES) 106 includes one or more hardware processors, and a memory. The PCRES 106 is configured to perform one or more of the operations described herein. The PCRES 106 is configured to receive historical rotary cutter usage data associated with the rotary cutter and a real-time pressure value applied on the rotary cutter from the machine 102 using the network 104. In an embodiment, the historical rotary cutter usage data includes discrete variables signifying object, such as number of sanitary pads quantity produced or continuous variables such as time wise pressure data, regrinding, number of times the rotary cutter has been used, manufacturer information etc. In one embodiment, the time wise pressure data include timing details when the pressure applied to the rotary cutter was changed. The PCRES 106 is also configured to receive historical data associated with each rotary cutter of a plurality of rotary cutters that was used by the machine 102 previously. In an embodiment, the historical data includes trends signifying loss of cutting property of each rotary cutter of the plurality of rotary cutters that can cause updating of the applied pressure.

The PCRES 106 is then configured to estimate a minimum usage limit and a maximum usage limit for the rotary cutter at the real-time pressure value based on the historical rotary cutter usage data and the real-time pressure value using a first trained model. Thereafter, the PCRES 106 is configured to monitor the real-time rotary cutter usage data to determine whether the minimum usage limit is reached for the rotary cutter. In an embodiment, the real-time rotary cutter usage data is received in real-time from the machine 102 using the network 104.

Further, upon determining that the minimum usage limit is reached for the rotary cutter, the PCRES 106 is configured to estimate a time for a next pressure change based on one or more physical parameters of the rotary cutter using a second trained model. In an embodiment, the one or more physical parameters are determined based on the real-time rotary cutter usage data that is collected in real-time from one or more sensors that are installed in the machine 102. The sensors basically collects operation related parameters such as current, speed etc. In case the minimum limit is yet to be reached for the rotary cutter, the machine 102 continues normal operation till the minimum usage limit is reached for the rotary cutter provided in the machine 102.

Once the estimated time for a next pressure change is determined, the PCRES 106 is configured to compare the estimated time with a predefined threshold i.e., the estimated maximum usage limit determined for the rotary cutter. If the estimated time crosses the predefined threshold, then a message is displayed to a user/an operator of the machine 102. In an embodiment, the message includes a notification to change the pressure applied on the rotary cutter within the estimated time. In case the estimated time is found to be within the predefined threshold, the PCRES 106 is configured to perform the next round of calculation for estimating time for next pressure change.

Additionally, the PCRES 106 is configured to determine an amount of pressure to be changed based on a rotary cutter usage index and the real-time pressure value. In an embodiment, the rotary cutter usage index is determined based on the historical rotary cutter usage data received from the machine 102. The historical rotary cutter usage data may include regrinding information, number of times the rotary cutter has been used, manufacturer information etc. Basically, the historical rotary cutter usage data dictates the required change in pressure at any point of time The PCRES 106 is then configured to determine a next pressure value for the rotary cutter based on the determined amount of pressure to be changed and the real-time pressure value using a pre-defined pressure calculation formula. Thereafter, the PCRES 106 displays the next pressure value for the rotary cutter to the user of the machine 102.

In an embodiment, the user of the machine 102 may verify pressure update to decide whether to change the pressure applied on the rotary cutter or not. In another embodiment, the PCRES 106 may automatically update the pressure applied to the rotary cutter to the next pressure value. In one embodiment, the PCRES 106 may send one or more signals to one or more actuators installed on the machine 102 using the network 104 for updating the pressure applied to the rotary cutter to the next pressure value.

The number and arrangement of systems, containers, and/or networks shown in FIG. 1 are provided as an example. There may be additional systems, machines, and/or networks; fewer systems, machines, and/or networks; different systems, machines, and/or networks; and/or differently arranged systems, machines, and/or networks than those shown in FIG. 1. Furthermore, two or more systems shown in FIG. 1 may be implemented within a single system or device, or a single system or device shown in FIG. 1 may be implemented as multiple, distributed systems or devices. Additionally, or alternatively, a set of systems (e.g., one or more systems) of the environment 100 may perform one or more functions described as being performed by another set of systems of the environment 100 (e.g., refer scenarios described above).

FIG. 2 illustrates an exemplary block diagram of a pressure change requirement estimation system (PCRES) 200 for real time estimation of pressure change requirements for rotary cutters, in accordance with an embodiment of the present disclosure. In an embodiment, the pressure change requirement estimation system 200 may also be referred as a system and may be interchangeably used herein. The system 200 is similar to the pressure change requirement estimation system (PCRES) 100 explained with reference to FIG. 1. In some embodiments, the system 200 is embodied as a cloud-based and/or SaaS-based (software as a service) architecture. In some embodiments, the system 200 may be implemented in a server system. In some embodiments, the system 200 may be implemented in a variety of computing systems, such as laptop computers, notebooks, hand-held devices, workstations, mainframe computers, and the like.

The PCRES 200 includes a computer system 202 and a database 204. The computer system 202 includes one or more processors 206 for executing instructions, a memory 208, a communication interface 210, and a user interface 216 that communicate with each other via a bus 212.

In some embodiments, the database 204 is integrated within computer system 202. For example, the computer system 202 may include one or more hard disk drives as the database 204. A storage interface 214 is any component capable of providing the one or more processors 206 with access to the database 204. The storage interface 214 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing the one or more processors 206 with access to the database 204.

In one embodiment, the database 204 is configured to store historical rotary cutter usage data associated with a rotary cutter and historical data associated with each rotary cutter of the plurality of rotary cutters. The database 204 is also configured to store predefined formulas, such as pre-defined pressure calculation formula and algorithms, such as polygon building algorithm and the like that may be used by the system 200 in real time estimation of the pressure change requirements.

The one or more processors 206 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory 208.

The memory 208 includes suitable logic, circuitry, and/or interfaces to store a set of computer readable instructions for performing operations. Examples of the memory 208 include a random-access memory (RAM), a read-only memory (ROM), a removable storage drive, a hard disk drive (HDD), and the like. It will be apparent to a person skilled in the art that the scope of the disclosure is not limited to realizing the memory 208 in the PCRES 200, as described herein. In another embodiment, the memory 208 may be realized in the form of a database server or a cloud storage working in conjunction with the PCRES 200, without departing from the scope of the present disclosure.

The one or more processors 206 are operatively coupled to the communication interface 210 such that the one or more processors 206 communicate with a remote device 218 such as, the machine 102, or communicated with any entity (for e.g., a machine learning/deep learning model) connected to the network 104. Further, the one or more processors 206 are operatively coupled to the user interface 216 for interacting with users, such as the user/operator of the machine 102 who is responsible for changing the pressure applied on the rotary cutter.

It is noted that the PCRES 200 as illustrated and hereinafter described is merely illustrative of an apparatus that could benefit from embodiments of the present disclosure and, therefore, should not be taken to limit the scope of the present disclosure. It is noted that the PCRES 200 may include fewer or more components than those depicted in FIG. 2.

In one embodiment, the one or more processors 206 includes a first trained model 220, a continuous monitoring module 222, a second trained model 224 and a pressure update calculation module 226.

The first trained model 220 includes suitable logic and/or interfaces for determining minimum and maximum time the rotary cutter can be used if it is operating at a particular pressure value. Basically, the first trained model 220 is trained to learn from the past usage of cutter i.e., from the historical rotary cutter usage data. The learning along with the real-time pressure value of the rotary cutter is then used by the first trained model 220 to estimate a minimum usage limit and a maximum usage limit for the rotary cutter at the real-time pressure value. In an embodiment, the first trained model 220 establishes a statistical range defining a minimum usage limit and a maximum usage limit of the rotary cutter at any given pressure value using the historical rotary cutter usage data. The historical rotary cutter usage data presents usage of the rotary cutter for each pressure value by the multiple values of parameters defining the usage of cutter. The statistical range is then used to determine the minimum usage limit and a maximum usage limit for the rotary cutter at the real-time pressure value.

In an embodiment, the continuous monitoring module 222 is in communication with the first trained model 220 and includes suitable logic and/or interfaces for monitoring real-time rotary cutter usage data received in real-time from the machine 102 to determine time when the minimum usage limit is reached for the rotary cutter. The continuous monitoring module 222 is also configured to determine time when the maximum usage limit is reached for the rotary cutter. **In** one embodiment, the continuous monitoring module 222 is configured to generate a message upon determining that the maximum usage limit is reached for the rotary cutter. The message may be displayed to the user of the machine 106 through the user interface 216. The message includes a notification to change the pressure applied on the rotary cutter within the estimated time.

The second trained model 224 is in communication with the first trained model 220 and the continuous monitoring module 222. The second trained model 224 includes suitable logic and/or interfaces for estimating a time for a next pressure change based on one or more physical parameters of the rotary cutter. The physical parameters can be quantified based on the real-time rotary cutter usage data that is gathered from the sensors defining operation related parameters such as current, speed etc.

The pressure update calculation module 226 is in communication with the second trained model 224 and the continuous monitoring module 222. The pressure update calculation module 226 includes suitable logic and/or interfaces for determining a rotary cutter usage index based on the historical rotary cutter usage data associated with the rotary cutter. In an embodiment, the historical rotary cutter usage data may include regrinding, number of times the rotary cutter has been used, manufacturer information, time details etc., which dictates the required change in pressure at any point of time. Mathematically, the rotary cutter usage index can be presented as:

$$Rotary\ cutter\ usage\ index$$
$$= fn(Cutter\ regrinding\ cycle, manufacturer, material, usage\ cycle, time)$$

The pressure update calculation module 226 is also configured to calculate an amount of pressure to be changed (also referred as delta pressure) based on the rotary cutter usage index and the real-time pressure value. The calculated amount of pressure to be changed is then used by the pressure update calculation module 226 along with the real-time pressure value to calculate a next pressure value for the rotary cutter using a pre-defined pressure calculation formula represented as:

$$Next\ pressure\ value = Real\ time\ pressure\ value\ +\ Delta\ pressure$$

In one embodiment, the user interface 216 is configured to display the message to the user / operator of the machine 102. The user interface 216 is also configured to display the next pressure value for the rotary cutter to the user / operator.

FIG. 3A, with reference to FIGS. 1 and 2, illustrates a schematic block diagram representation 300 of the first trained model 220 associated with the system 200 of FIG. 2 or the PCRES of FIG. 1 for real time estimation of pressure change requirements for rotary cutters, in accordance with an embodiment of the present disclosure. In an embodiment, the first trained model 220 includes a data pre-processing module 302, an auto identification module 304, and a usage limit estimation module 306.

The data pre-processing module 302 includes suitable logic and/or interfaces for receiving the historical rotary cutter usage data associated with the rotary cutter. The historical rotary cutter usage data includes one or more parameters such as discrete variables signifying object quantity produced and/or continuous variables such as time-wise pressure data. In one embodiment, the data pre-processing module 302 is configured to categorize the parameters signifying the cutter usage over time. The data pre-processing module 302 is also configured to filter out noise (i.e., irrelevant data) associated with the parameters to provide the pre-processed historical rotary cutter usage data.

The auto identification module 304 includes suitable logic and/or interfaces for identifying one or more events on which the pressure value applied to the rotary cutter is changed based on the parameters included in the pre-processed historical rotary cutter usage data and the pressure values at which the rotary cutter is operated.

The usage limit estimation module 306 includes suitable logic and/or interfaces for establishing the statistical range defining a minimum usage limit and a maximum usage limit of the rotary cutter at any given pressure value using the pre-processed historical rotary cutter usage data and the one or more events. The established statistical range is then further used by the usage limit estimation module 306 to determine the minimum usage limit and a maximum usage limit for the rotary cutter at the real-time pressure value.

FIG. 3B, with reference to FIGS. 1 and 2, illustrates a schematic block diagram representation 300 of the second trained model 224 associated with the system 200 of FIG. 2 or the PCRES of FIG. 1 for real time estimation of pressure change requirements for rotary cutters, in accordance with an embodiment of the present disclosure. In an embodiment, the second trained model 224 includes a data pre-processing module 352, an auto identification module 354, a confidence-interval building module 356, a similarity score estimation module 358, and a time estimation module 360.

The data pre-processing module 352 is similar to the data pre-processing module 302 discussed with reference to FIG. 3A. The data pre-processing module 352 includes suitable logic and/or interfaces for extracting useful information i.e., estimate of pressure change from the real-time rotary cutter usage data associated with the rotary cutter. Basically, the real-time rotary cutter usage data includes the sensor signals that are received from the machine 102. The sensor signals are not directly usable as physical characteristic changes are usually minuscule and often not representative in their direct form. Further, the sensor data contains undesired noise, so actual pressure signal data fluctuates around the underlying applied pressure. So, to extract useful information, the sensor signals are filtered for further analysis. In an embodiment, the data pre-processing module 352 may use any of the known filtering techniques, such as LOESS algorithm, STL etc., for performing filtering of the sensor data.

In an embodiment, the data pre-processing module 352 is also configured to eliminate noise from the historical data associated with each rotary cutter of a plurality of rotary cutters to obtain pre-processed historical data.

The auto identification module 354 is in communication with the data pre-processing module 352. The auto identification module 354 includes suitable logic and/or interfaces for automatically identifying events in which change in pressure is triggered by the user from the pre-processed historical data. Basically, the historical data is used by the system 200 to understand underlying trends that signify loss of cutting property of each rotary cutter of the plurality of rotary cutters and hence requires change in pressure. Hence, to understand the trend, the auto identification module 354 identifies/-marks the events which corresponds to the change in pressure automatically. As the auto identification module 354 works on clean historical data i.e., the pre-processed historical data, the auto identification module 354 can capture the actual change in pressure that is further marked as an event. Further, parameters of the machine changes with every step change in pressure. To compensate for the same, historical data of every equi-pressure window has to be extracted seperately. So, the auto identification module 354 performs pressure wise seggregation of the pre-processed historical data for the complete cycle of each rotary cutter with respect to multi-pressure values to obtain the segregated data for the respective rotary cutter. For example, the pressure of the rotary cutter is changed to a new pressure, say, from 1.5 bar to 1.6 bar and the pressure is further changed from the new pressure to next new pressure, say, 1.6 bar to 1.7 bar. Thus, by knowing these two events, the data for desired pressure, say 1.6 bar can be gathered for all cutters in the database by the auto identification module 354. It should be noted that the auto identification module 354 uses few other machine signals also such as machine ramp up/down events along with variable thresholds for identifying the events.

In an embodiment, the confidence-interval building module 356 is in communication with the data pre-processing module 352 and the auto identification module 354. The confidence-interval building module 356 includes suitable logic and/or interfaces for determining upper limit confidence interval and lower limit confidence interval for each instance of each rotary cutter of the plurality of rotary cutters based on the segregated data obtained for the respective rotary cutter using a statistical technique. In parallel, the confidence-interval building module 356 is also configured to determine upper limit confidence interval and lower limit confidence interval for each instance of the rotary cutter based on the real-time rotary cutter usage data using the same statistical technique. In an embodiment, the statistical measures that may be used for determining the upper limit confidence interval and the lower limit confidence interval includes, but are not limited to, standard deviation, interquartile range (IQR) etc. In one embodiment, the confidence-interval building module 356 uses a moving window of ’n’ time stamps for each rotary cutter and then determines the upper limit confidence interval and the lower limit confidence interval for that window. In an embodiment, ’n’ can be any value such 10, 20, 50 etc. The confidence-interval building module 356 may also perform smoothening of the upper limit confidence interval and the lower limit confidence interval for better results using a smoothening technique.

Thereafter, the confidence-interval building module 356 is configured to create a polygon for each rotary cutter of the plurality of rotary cutters to create a library of polygons and a rotary cutter polygon for the rotary cutter using a polygon building algorithm, such as a polygon building algorithm. As the rotary cutters may have lasted different time durations due to various operation or conditional factors historically at any given pressure value, creating the library of such different rotary cutters may really be helpful in estimating the pressure change requirement of the rotary cutter being used in real-time in the machine 102. In particular, the polygon building algorithm connects the upper limit and the lower limit confidence intervals determined for each rotary cutter in time instance wise manner to obtain connected upper limit confidence intervals and connected lower limit confidence intervals for each rotary cutter of the plurality of rotary cutters and the rotary cutter present in the machine 102. Further, the confidence-interval building module 356 is configured to enclose the connected upper limit confidence intervals and the connected lower limit confidence intervals obtained for each rotary cutter to create the polygon for the respective rotary cutter. The connected upper limit confidence intervals and the connected lower limit confidence intervals obtained for the rotary cutter are enclosed to create the rotary cutter polygon for the rotary cutter.

The similarity score estimation module 358 is in communication with the confidence-interval building module 356. The similarity score estimation module 358 includes suitable logic and/or interfaces for comparing the rotary cutter polygon with each polygon present in the library of polygons to obtain a similarity score for the respective polygon. In particular, each polygon that is created from the historical data is compared with the rotary cutter polygon created using the real-time rotary cutter usage data. Further, the similarity score is calculated between the respective polygon and the rotary cutter polygon based upon similarity measure calculated and based on union and interesection of the polygon and the rotary cutter polygon, in one example embodiment. Such similarity score computation shall not be construed as limiting the scope of the present disclosure, and there could be other approaches of computing the same. So, higher the similarity score greater the similarity between the polygon and the rotary cutter polygon and hence the remaining usefule life (RUL)/time to change the pressure will likely be similar to the historical rotary cutter associated with the polygon. Thus, it can be concluded that the similarity score measure is thus a quantification of 'distance' between two polygons. The higher similrity score means closer is the distance.

The similarity score estimation module 358 is further configured to select at least one polygon from the library of polygons based on the similarity score. In particular, at least one polygon that has the highest similarity score is selected by the similarity score estimation module 358. The selection createria for the polygins can be thought as the nearest neighbour apporach. The closest neighbors datasets can now be used for final estimation of time to change pressure/RUL of the rotary cutter.

In an embodiment, the time estimation module 360 is in communication with the similarity score estimation module 358. The time estimation module 360 includes suitable logic and/or interfaces for accessing the pre-processed historical data associated with the at least one selected polygon. The time estimation module 360 is further configured to estimate the time for the next pressure change based on the pre-processed historical data associated with the at least one selected polygon. Additionally, the time estimation module 360 is configured to compare the estimated time with the estimated maximum usage limit determined for the rotary cutter. If the estimated time is with the estimated maximum usage limit, the time estimation module 360 is configured to communicate the same to the continuous monitoring module 222. Otherwise, the one or more processors 206 performs the next round of calculation for estimation of time for pressure change.

FIG. 4, with reference to FIGS. 1, 2 and 3A-3B, illustrates an exemplary flow diagram of a method 400 for real time estimation of pressure change requirements for rotary cutters, in accordance with an embodiment of the present disclosure. The method 400 may use the system 200 of FIG. 2 and the pressure change requirement estimation system (PCRES) 106 of FIG. 1 for execution. In an embodiment, the system(s) 200 comprises one or more data storage devices or the memory 208 operatively coupled to the one or more hardware processors 206 and is configured to store instructions for execution of steps of the method 400 by the one or more hardware processors 206. The sequence of steps of the flow diagram may not be necessarily executed in the same order as they are presented. Further, one or more steps may be grouped together and performed in form of a single step, or one step may have several sub-steps that may be performed in parallel or in sequential manner. The steps of the method 400 of the present disclosure will now be explained with reference to the components of the system 200 as depicted in FIG. 2, and the PCRES 106 of FIG. 1.

In an embodiment of the present disclosure, at step 402, the one or more hardware processors 206 of the pressure change requirement estimation system (PCRES) 200 receive (a) historical rotary cutter usage data associated with a rotary cutter, (b) a real-time pressure value applied on the rotary cutter and (c) historical data associated with each rotary cutter of a plurality of rotary cutters. In an embodiment, the historical rotary cutter usage data includes discrete variables signifying object, such as sanitary pad quantity produced or continuous variables such as time wise pressure data, regrinding, number of times the rotary cutter is being used, manufacturer information etc.

At step 404 of the present disclosure, the one or more hardware processors 206 of the PCRES 200 estimate a minimum usage limit and a maximum usage limit for the rotary cutter at the real-time pressure value based, at least in part, on the historical rotary cutter usage data and the real-time pressure value using a first trained model.

As already explained previously, the auto identification module 304 of the first trained model 220 automatically identifies events on which the pressure value applied to the rotary cutter is changed. The events information is further utilized by the first trained model 220 to establish a statistical range defining a minimum usage limit and a maximum usage limit of the rotary cutter at any given pressure value. Further, the first trained model 220 utilizes the statistical range to estimate the minimum usage limit and the maximum usage limit for the rotary cutter at the real-time pressure value.

At step 406 of the present disclosure, the one or more hardware processors 206 of the PCRES 200 monitor real-time rotary cutter usage data to determine whether the minimum usage limit is reached for the rotary cutter. As discussed, the continuous monitoring module 222 monitors the real-time rotary cutter usage data received in real-time from the machine 102 to determine time when the minimum usage limit is reached for the rotary cutter. As soon as the minimum usage limit is reached for the rotary cutter, step 408 is performed.

At step 408 of the present disclosure, the one or more hardware processors 206 of the PCRES 200 estimate a time for a next pressure change based on one or more physical parameters of the rotary cutter using a second trained model upon determining that the minimum usage limit is reached for the rotary cutter. In an embodiment, the one or more physical parameters are determined based on real-time rotary cutter usage data collected in real-time from the one or more sensors (present in the machine 102) defining operation related parameters such as current, speed etc. The process of estimating the time for the next pressure change using the second trained model 224 is explained in detail with reference to FIG. 3B and the description is not reiterated herein for the sake of brevity.

In an embodiment, at step 410 of the present disclosure, the one or more hardware processors 206 of the PCRES 200 compare the estimated time with the estimated maximum usage limit for the rotary cutter. Basically, the hardware processors 206 compare the estimated time with a pre-defined threshold that is the estimated maximum usage limit found for the rotary cutter to check whether the estimated time is within the pre-defined threshold. If the estimated time is found to be within the pre-defined threshold, the hardware processors 206 of the PCRES 200 performs next round of calculation for estimation of time for the next pressure change else a flag to change the rotary cutter pressure is raised (explained with respect to step 412).

At step 412 of the present disclosure, the one or more hardware processors 206 of the PCRES 200 displays a message to a user of the machine based on the comparison. If the estimated time is found to be crossing the pre-defined threshold, the flag to change the rotary cutter pressure is raised by displaying the message to the user. The message includes a notification to change the pressure applied on the rotary cutter within the estimated time.

FIG. 5, with reference to FIGS. 1 through 4, illustrates an example representation of comparison of the real-time rotary cutter usage data with the historical data associated with two rotary cutters for pressure change detection, in accordance with an embodiment of the present disclosure.

As seen in the FIG.5, for real-time pressure value of ’P’, two historical profiles were available with TH1 and TH2 marking respective end of the rotary cutter life. It should be noted that the TH1 represents the time for historic knife "1" and TH1 represents the time for historic knife ’2’. The rotary cutter can be seen at operating at time "t1" when the second trained model 224 is triggered. The real-time rotary cutter usage data for operational rotary cutter till time t1 is extracted and further compared with historical rotary cutters and based on the highest similarity between the usage data, the time for the next pressure change is estimated for the operational rotary cutter based on TH1 and TH2.

FIG. 6, with reference to FIGS. 1 through 5, illustrates an example graphical representation of a polygon created for a rotary cutter, in accordance with an embodiment of the present disclosure.

As seen in the FIG.6, the graphical representation of the polygon shows that the upper limit confidence intervals and the lower limit confidence intervals that are obtained for the rotary cutter are enclosed and connected to create the polygon for the rotary cutter.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

As discussed earlier, rotary cutters tend to lose material and sharpness over their usage cycle. So, to make it work for a longer time, a cylinder is used to impart a vertical force. The pressure that is to be applied to a rotary cutter is changed manually by an operator based on his/her experience. Most of the times, the pressure change is applied once the machine stops automatically as the rotary cutter cannot execute the cutting operation, thereby leading to wastage of operational time as well as the material which has to be discarded. Moreover, because of inefficient utilization of the rotary cutter, the rotary cutter loses its cutting property early that further leads to increase in cost as the rotary cutter needs to be changed frequently for proper functioning of the machine. To overcome these disadvantages, embodiments of the present disclosure provide methods and systems for real time estimation of pressure change requirements for rotary cutters. More specifically, the system identifies pressure change requirement while considering both time of usage as well as physics-based signals. Once the pressure change requirement is identified, the system automatically verifies and calculates the exact pressure change requirement, thereby guiding the system to automatically update the pressure applied on the rotary cutters in real-time. Basically, the system automatically predicts the next rotary cutter pressure change time based on historical rotary cutter usage data and physical parameters of the rotary cutter and alerts a user/operator of the machine to change the pressure when it is due, thereby mitigating the need for human judgement that further helps in ensuring optimal utilization of the rotary cutters and higher productivity while reducing the wastage of the operational time and the material.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

**1.** A processor implemented method (400), comprising:

receiving, by a pressure change requirement estimation system (PCRES) via one or more hardware processors,

(a) historical rotary cutter usage data associated with a rotary cutter, wherein the rotary cutter usage data comprises:

one or more discrete variables signifying an object that is cut by the rotary cutter, and
one or more continuous variables associated with the rotary cutter, wherein the one or more continuous variables comprises one or more of time-wise pressure data, a number of times the rotary cutter has been used, and manufacturer information associated with rotary cutter, and wherein the time-wise pressure data comprises time details when a pressure applied to the rotary cutter was changed,

(b) a real-time pressure value applied on the rotary cutter, and
(c) historical data associated with each rotary cutter of a plurality of rotary cutters, wherein the historical trends data comprises historical trends signifying loss of cutting property of each rotary cutter (402);
estimating, by the PCRES via the one or more hardware processors, a minimum usage limit and a maximum usage limit for the rotary cutter at the real-time pressure value based, at least in part, on the historical rotary cutter usage data and the real-time pressure value using a first trained model (404);

monitoring, by the PCRES via the one or more hardware processors, real-time rotary cutter usage data to determine whether the minimum usage limit has reached for the rotary cutter, wherein the real-time rotary cutter usage data is received in real-time from a machine comprising the rotary cutter (406);
upon determining that the minimum usage limit has reached for the rotary cutter, estimating, by the PCRES via the one or more hardware processors, a time for a next pressure change based on one or more physical parameters of the rotary cutter using a second trained model, wherein the one or more physical parameters are determined based on the real-time rotary cutter usage data (408);

comparing, by the PCRES via the one or more hardware processors, the estimated time with the estimated maximum usage limit for the rotary cutter (410); and

displaying, by the PCRES via the one or more hardware processors, a message to a user of the machine based on the comparison, wherein the message comprises a notification to change the pressure applied on the rotary cutter within the estimated time (412).

**2.** The processor implemented method of claim 1, further comprising:

determining, by the PCRES via the one or more hardware processors, a rotary cutter usage index based on the historical rotary cutter usage data associated with a rotary cutter; and

calculating, by the PCRES via the one or more hardware processors, an amount of pressure to be changed based, at least in part on, the rotary cutter usage index and the real-time pressure value;

calculating, by the PCRES via the one or more hardware processors, a next pressure value for the rotary cutter based on the amount of pressure to be changed and the real-time pressure value using a pre-defined pressure calculation formula; and

displaying, by the PCRES via the one or more hardware processors, the next pressure value for the rotary cutter to the user of the machine.

**3.** The processor implemented method of claim 2, further comprising:
updating, by the PCRES via the one or more hardware processors, the real-time pressure value that is applied on the rotary cutter to the next pressure value.

**4.** The processor implemented method of claim 1, wherein the step of estimating, by the PCRES via the one or more hardware processors, the minimum usage limit and the maximum usage limit for the rotary cutter at the real-time pressure value based, at least in part, on the historical rotary cutter usage data and the real-time pressure value using the first trained model comprises:

identifying, by the PCRES via the one or more hardware processors, one or more events on which a pressure applied to the rotary cutter is changed based on the rotary cutter usage data, wherein each event of the one or more events is associated with a pressure value;

defining, by the PCRES via the one or more hardware processors, usage of the rotary cutter for each event of the one or more events, wherein the usage of an event includes time details for which the rotary cutter is working at a respective pressure value;

generating, by the PCRES via the one or more hardware processors, a statistical range defining a minimum limit and a maximum limit of the usage of the rotary cutter at each event of the one or more events; and

estimating, by the PCRES via the one or more hardware processors, the minimum usage limit and the maximum usage limit for the rotary cutter at the real-time pressure value based, at least in part on, the statistical range and the real-time pressure value.

**5.** The processor implemented method of claim 1, wherein the step of estimating, by the PCRES via the one or more hardware processors, the time for the next pressure change based on one or more physical parameters of the rotary cutter using the second trained model comprises:

pre-processing, by the PCRES via the one or more hardware processors, the historical data associated with each rotary cutter to obtain pre-processed historical data for the respective rotary cutter;

performing, by the PCRES via the one or more hardware processors, pressure wise segregation of the pre-processed historical data associated with each rotary cutter of the plurality of rotary cutters to obtain segregated data for the respective rotary cutter;

determining, by the PCRES via the one or more hardware processors, upper limit confidence interval and lower limit confidence interval for each instance of each rotary cutter of the plurality of rotary cutters based on the segregated data obtained for the respective rotary cutter, and for each instance of the rotary cutter based on the real-time rotary cutter usage data using a statistical technique;

creating, by the PCRES via the one or more hardware processors, a polygon for each rotary cutter of the plurality of rotary cutters to create a library of polygons and a rotary cutter polygon for the rotary cutter using a polygon building algorithm, wherein the polygon for each rotary cutter of the plurality of rotary cutters and the rotary cutter is created based on the upper limit confidence interval and the lower limit confidence interval determined for the respective rotary cutter;

comparing, by the PCRES via the one or more hardware processors, the rotary cutter polygon with each polygon present in the library of polygons to obtain a similarity score for the respective polygon;
selecting, by the PCRES via the one or more hardware processors, at least one polygon from the library of polygons based on the similarity score;
accessing, the PCRES via the one or more hardware processors, the pre-processed historical data associated with the at least one selected polygon; and
estimating, by the PCRES via one or more hardware processors, the time for the next pressure change based on the pre-processed historical data associated with the at least one selected polygon.

**6.** The processor implemented method of claim 5, wherein the step of creating, by the PCRES via the one or more hardware processors, the polygon for each rotary cutter of the plurality of rotary cutters to create the library of polygons using a polygon building algorithm comprises:

connecting, by the PCRES via the one or more hardware processors, the upper limit confidence interval and the lower limit confidence interval determined for each rotary cutter in time instance wise manner to obtain one or more connected upper limit confidence intervals and one or more connected lower limit confidence intervals for each rotary cutter; and
enclosing, by the PCRES via the one or more hardware processors, the one or more connected upper limit confidence intervals and the one or more connected lower limit confidence intervals obtained for each rotary cutter to create the polygon for respective rotary cutter.

**7.** A pressure change requirement estimation system (200), comprising:

a memory (208) storing instructions;
one or more communication interfaces (210); and
one or more hardware processors (206) coupled to the memory (208) via the one or more communication interfaces (210), wherein the one or more hardware processors (206) are configured by the instructions to:

receive

(a) historical rotary cutter usage data associated with a rotary cutter, wherein the rotary cutter usage data comprises:

one or more discrete variables signifying an object that is cut by the rotary cutter, and
one or more continuous variables associated with the rotary cutter, wherein the one or more continuous variables comprises one or more time-wise pressure data, a number of times the rotary cutter has been used, and manufacturer information associated with rotary cutter, and wherein the time-wise pressure data comprises time details when a pressure applied to the rotary cutter was changed,

(b) a real-time pressure value applied on the rotary cutter, and
(c) historical data associated with each rotary cutter of a plurality of rotary cutters, wherein the historical trends data comprises historical trends signifying loss of cutting property of each rotary cutter;

estimate a minimum usage limit and a maximum usage limit for the rotary cutter at the real-time pressure value based, at least in part, on the historical rotary cutter usage data and the real-time pressure value using a first trained model;
monitor real-time rotary cutter usage data to determine whether the minimum usage limit has reached for the rotary cutter, wherein the real-time rotary cutter usage data is received in real-time from a machine comprising the rotary cutter;
upon determining that the minimum usage limit has reached for the rotary cutter, estimate a time for a next pressure change based on one or more physical parameters of the rotary cutter using a second trained model, wherein the one or more physical parameters are determined based on the real-time rotary cutter usage data;
compare the estimated time with the estimated maximum usage limit for the rotary cutter; and
display a message to a user of the machine based on the comparison, wherein the message comprises a notification to change the pressure applied on the rotary cutter within the estimated time.

**8.** The system as claimed in claim 7, wherein the system is further caused to:

determine a rotary cutter usage index based on the historical rotary cutter usage data associated with a rotary cutter;
calculate an amount of pressure to be changed based, at least in part on, the rotary cutter usage index and the real-time pressure value;
calculate a next pressure value for the rotary cutter based on the amount of pressure to be changed and the real-time pressure value using a pre-defined pressure calculation formula; and
display the next pressure value for the rotary cutter to the user of the machine.

**9.** The system as claimed in claim 8, wherein the system is further caused to:
update the real-time pressure value that is applied on the rotary cutter to the next pressure value.

**10.** The system as claimed in claim 7, wherein to estimate a minimum usage limit and a maximum usage limit for the rotary cutter at the real-time pressure value based, at least in part, on the historical rotary cutter usage data and the real-time pressure value using a first trained model, the system is further caused to:

identify one or more events on which a pressure applied to the rotary cutter is changed based on the historical rotary cutter usage data, wherein each event of the one or more events is associated with a pressure value;
define usage of the rotary cutter for each event of the one or more events, wherein the usage of an event includes time details for which the rotary cutter is working at a respective pressure value;
generate a statistical range defining a minimum limit and a maximum limit of the usage of the rotary cutter at each event of the one or more events; and
estimate the minimum usage limit and the maximum usage limit for the rotary cutter at the real-time pressure value based, at least in part on, the statistical range and the real-time pressure value.

**11.** The system as claimed in claim 7, wherein to estimate the time for the next pressure change based on one or more physical parameters of the rotary cutter using the second trained model, the system is further caused to:

pre-process the historical data associated with each rotary cutter to obtain pre-processed historical data for the respective rotary cutter;
perform pressure wise segregation of the pre-processed historical data associated with each rotary cutter of the plurality of rotary cutters to obtain segregated data for the respective rotary cutter;
determine upper limit confidence interval and lower limit confidence interval for each instance of each rotary cutter of the plurality of rotary cutters based on the segregated data obtained for the respective rotary cutter, and for each instance of the rotary cutter based on the real-time rotary cutter usage data using a statistical technique;
create a polygon for each rotary cutter of the plurality of rotary cutters to create a library of polygons and a rotary cutter polygon for the rotary cutter using a polygon building algorithm, wherein the polygon for each rotary cutter of the plurality of rotary cutters and the rotary cutter is created based on the upper limit confidence interval and the lower limit confidence interval determined for the respective rotary cutter;
compare the rotary cutter polygon with each polygon present in the library of polygons to obtain a similarity score for the respective polygon;
select at least one polygon from the library of polygons based on the similarity score;
access the pre-processed historical data associated with the at least one selected polygon; and
estimate the time for the next pressure change based on the pre-processed historical data associated with the at least one selected polygon.

**12.** The system as claimed in claim 11, wherein to create the polygon for each rotary cutter of the plurality of rotary cutters to create the library of polygons using the polygon building algorithm, the system is further caused to:

connect the upper limit confidence interval and the lower limit confidence interval determined for each rotary cutter in time instance wise manner to obtain one or more connected upper limit confidence intervals and one or more connected lower limit confidence intervals for each rotary cutter; and
enclose the one or more connected upper limit confidence intervals and the one or more connected lower limit confidence intervals obtained for each rotary cutter to create the polygon for respective rotary cutter.

**13.** One or more non-transitory machine-readable information storage mediums comprising one or more instructions which when executed by one or more hardware processors cause:

receiving, by a pressure change requirement estimation system (PCRES),

(a) historical rotary cutter usage data associated with a rotary cutter, wherein the rotary cutter usage data comprises:

one or more discrete variables signifying an object that is cut by the rotary cutter, and
one or more continuous variables associated with the rotary cutter, wherein the one or more continuous variables comprises one or more time-wise pressure data, a number of times the rotary cutter has been used, and manufacturer information associated with rotary cutter, and wherein the time-wise pressure data comprises time details when a pressure applied to the rotary cutter was changed,

(b) a real-time pressure value applied on the rotary cutter, and
(c) historical trends data associated with each rotary cutter of a plurality of rotary cutters, wherein the historical trends data comprises historical trends signifying loss of cutting property of each rotary cutter;

estimating, by the PCRES, a minimum usage limit and a maximum usage limit for the rotary cutter at the real-time pressure value based, at least in part, on the historical rotary cutter usage data and the real-time pressure value using a first trained model ;
monitoring, by the PCRES, real-time rotary cutter usage data to determine whether the minimum usage limit has reached for the rotary cutter, wherein the real-time rotary cutter usage data is received in real-time from a machine comprising the rotary cutter ;
upon determining that the minimum usage limit has reached for the rotary cutter, estimating, by the PCRES, a time for a next pressure change based on one or more physical parameters of the rotary cutter using a second trained model, wherein the one or more physical parameters are determined based on the real-time rotary cutter usage data;
comparing, by the PCRES, the estimated time with the estimated maximum usage limit for the rotary cutter ; and
displaying, by the PCRES, a message to a user of the machine based on the comparison, wherein the message comprises a notification to change the pressure applied on the rotary cutter within the estimated time.

**14.** The one or more non-transitory machine-readable information storage mediums of claim 13, wherein the one or more instructions which when executed by the one or more hardware processors further cause:

determining, by the PCRES, a rotary cutter usage index based on the historical rotary cutter usage data associated with a rotary cutter; and
calculating, by the PCRES, an amount of pressure to be changed based, at least in part on, the rotary cutter usage index and the real-time pressure value;
calculating, by the PCRES, a next pressure value for the rotary cutter based on the amount of pressure to be changed and the real-time pressure value using a pre-defined pressure calculation formula; and
displaying, by the PCRES, the next pressure value for the rotary cutter to the user of the machine.

**15.** The one or more non-transitory machine-readable information storage mediums of claim 14, wherein the one or more instructions which when executed by the one or more hardware processors further cause:
updating, by the PCRES via the one or more hardware processors, the real-time pressure value that is applied on the rotary cutter to the next pressure value.

## Patentansprüche

**1.** Prozessorimplementiertes Verfahren (400), umfassend:

Empfangen, durch ein Druckänderungsanforderungs-Schätzsystem (PCRES) über einen oder mehrere Hardwareprozessoren,

(a) historische Rotationsschneider-Nutzungsdaten, die einem Rotationsschneider zugeordnet sind, wobei die Rotationsschneider-Nutzungsdaten Folgendes umfassen:

eine oder mehrere diskrete Variablen, die ein Objekt kennzeichnen, das durch den Rotationsschneider geschnitten wird, und
eine oder mehrere kontinuierliche Variablen, die dem Rotationsschneider zugeordnet sind, wobei die eine oder mehreren kontinuierlichen Variablen eines oder mehrere von zeitbezogenen Druckdaten, einer Anzahl von Malen, die der Rotationsschneider verwendet wurde, und Herstellerinformationen, die dem Rotationsschneider zugeordnet sind, umfassen, und wobei die zeitbezogenen Druckdaten Zeitdetails umfassen, wenn ein auf den Rotationsschneider ausgeübter Druck geändert wurde,

(b) einen Echtzeit-Druckwert, der auf den Rotationsschneider ausgeübt wird, und
(c) historische Daten, die jedem Rotationsschneider einer Mehrzahl von Rotationsschneidern zugeordnet sind, wobei die historischen Trenddaten historische Trends umfassen, die einen Verlust der Schneideigenschaft jedes Rotationsschneiders (402) kennzeichnen; Schätzen, durch das PCRES über den einen oder die mehreren Hardwareprozessoren, einer minimalen Nutzungsgrenze und einer maximalen Nutzungsgrenze für den Rotationsschneider bei dem Echtzeit-Druckwert, basierend zumindest teilweise auf den historischen Rotationsschneider-Nutzungsdaten und dem Echtzeit-Druckwert unter Verwendung eines ersten trainierten Modells (404);

Überwachen, durch das PCRES über den einen oder die mehreren Hardwareprozessoren, von Echtzeit-Rotationsschneider-Nutzungsdaten, um zu bestimmen, ob die minimale Nutzungsgrenze für den Rotationsschneider erreicht wurde, wobei die Echtzeit-Rotationsschneider-Nutzungsdaten in Echtzeit von einer Maschine empfangen werden, die den Rotationsschneider (406) umfasst;
beim Bestimmen, dass die minimale Nutzungsgrenze für den Rotationsschneider erreicht wurde, Schätzen, durch das PCRES über den einen oder die mehreren Hardwareprozessoren, einer Zeit für eine nächste Druckänderung basierend auf einem oder mehreren physikalischen Parametern des Rotationsschneiders unter Verwendung eines zweiten trainierten Modells, wobei der eine oder die mehreren physikalischen Parameter basierend auf den Echtzeit-Rotationsschneider-Nutzungsdaten (408) bestimmt werden;
Vergleichen, durch das PCRES über den einen oder die mehreren Hardwareprozessoren, der geschätzten Zeit mit der geschätzten maximalen Nutzungsgrenze für den Rotationsschneider (410); und
Anzeigen, durch das PCRES über den einen oder die mehreren Hardwareprozessoren, einer Nachricht an einen Benutzer der Maschine basierend auf dem Vergleich, wobei die Nachricht eine Benachrichtigung umfasst, um den auf den Rotationsschneider ausgeübten Druck innerhalb der geschätzten Zeit zu ändern (412).

2. Prozessorimplementiertes Verfahren nach Anspruch 1, ferner umfassend:

Bestimmen, durch das PCRES über den einen oder die mehreren Hardwareprozessoren, eines Rotationsschneider-Nutzungsindex basierend auf den historischen Rotationsschneider-Nutzungsdaten, die einem Rotationsschneider zugeordnet sind; und
Berechnen, durch das PCRES über den einen oder die mehreren Hardwareprozessoren, eines zu ändernden Druckbetrags basierend zumindest teilweise auf dem Rotationsschneider-Nutzungsindex und dem Echtzeit-Druckwert;
Berechnen, durch das PCRES über den einen oder die mehreren Hardwareprozessoren, eines nächsten Druckwerts für den Rotationsschneider basierend auf dem zu ändernden Druckbetrag und dem Echtzeit-Druckwert unter Verwendung einer vordefinierten Druckberechnungsformel; und
Anzeigen, durch das PCRES über den einen oder die mehreren Hardwareprozessoren, des nächsten Druckwerts für den Rotationsschneider für den Benutzer der Maschine.

3. Prozessorimplementiertes Verfahren nach Anspruch 2, ferner umfassend:
Aktualisieren, durch das PCRES über den einen oder die mehreren Hardwareprozessoren, des Echtzeit-Druckwerts, der auf den Rotationsschneider ausgeübt wird, auf den nächsten Druckwert.

4. Prozessorimplementiertes Verfahren nach Anspruch 1, wobei der Schritt des Schätzens, durch das PCRES über den einen oder die mehreren Hardwareprozessoren, der minimalen Nutzungsgrenze und der maximalen Nutzungsgrenze für den Rotationsschneider bei dem Echtzeit-Druckwert basierend zumindest teilweise auf den historischen Rotationsschneider-Nutzungsdaten und dem Echtzeit-Druckwert unter Verwendung des ersten trainierten Modells umfasst:

Identifizieren, durch das PCRES über den einen oder die mehreren Hardwareprozessoren, eines oder mehrerer Ereignisse, bei denen ein auf den Rotationsschneider ausgeübter Druck geändert wird, basierend auf den Rotationsschneider-Nutzungsdaten, wobei jedes Ereignis des einen oder der mehreren Ereignisse einem Druckwert zugeordnet ist;
Definieren, durch das PCRES über den einen oder die mehreren Hardwareprozessoren, der Nutzung des Rotationsschneiders für jedes Ereignis des einen oder der mehreren Ereignisse, wobei die Nutzung eines Ereignisses Zeitdetails beinhaltet, für die der Rotationsschneider bei einem jeweiligen Druckwert arbeitet;
Erzeugen, durch das PCRES über den einen oder die mehreren Hardwareprozessoren, eines statistischen Bereichs, der eine minimale Grenze und eine maximale Grenze der Nutzung des Rotationsschneiders bei jedem Ereignis des einen oder der mehreren Ereignisse definiert; und
Schätzen, durch das PCRES über den einen oder die mehreren Hardwareprozessoren, der minimalen Nutzungsgrenze und der maximalen Nutzungsgrenze für den Rotationsschneider bei dem Echtzeit-Druckwert basierend zumindest teilweise auf dem statistischen Bereich und dem Echtzeit-Druckwert.

**5.** Prozessorimplementiertes Verfahren nach Anspruch 1, wobei der Schritt des Schätzens, durch das PCRES über den einen oder die mehreren Hardwareprozessoren, der Zeit für die nächste Druckänderung basierend auf einem oder mehreren physikalischen Parametern des Rotationsschneiders unter Verwendung des zweiten trainierten Modells umfasst:

Vorverarbeiten, durch das PCRES über den einen oder die mehreren Hardwareprozessoren, der historischen Daten, die jedem Rotationsschneider zugeordnet sind, um vorverarbeitete historische Daten für den jeweiligen Rotationsschneider zu erhalten;
Durchführen, durch das PCRES über den einen oder die mehreren Hardwareprozessoren, einer druckweisen Trennung der vorverarbeiteten historischen Daten, die jedem Rotationsschneider der Mehrzahl von Rotationsschneidern zugeordnet sind, um getrennte Daten für den jeweiligen Rotationsschneider zu erhalten;
Bestimmen, durch das PCRES über den einen oder die mehreren Hardwareprozessoren, eines oberen Grenzvertrauensintervalls und eines unteren Grenzvertrauensintervalls für jede Instanz jedes Rotationsschneiders der Mehrzahl von Rotationsschneidern basierend auf den getrennten Daten, die für den jeweiligen Rotationsschneider erhalten wurden, und für jede Instanz des Rotationsschneiders basierend auf den Echtzeit-Rotationsschneider-Nutzungsdaten unter Verwendung einer statistischen Technik;
Erzeugen, durch das PCRES über den einen oder die mehreren Hardwareprozessoren, eines Polygons für jeden Rotationsschneider der Mehrzahl von Rotationsschneidern, um eine Bibliothek von Polygonen und ein Rotationsschneider-Polygon für den Rotationsschneider unter Verwendung eines Polygonbaualgorithmus zu erzeugen, wobei das Polygon für jeden Rotationsschneider der Mehrzahl von Rotationsschneidern und den Rotationsschneider basierend auf dem oberen Grenzvertrauensintervall und dem unteren Grenzvertrauensintervall erzeugt wird, die für den jeweiligen Rotationsschneider bestimmt wurden;
Vergleichen, durch das PCRES über den einen oder die mehreren Hardwareprozessoren, des Rotationsschneider-Polygons mit jedem Polygon, das in der Bibliothek von Polygonen vorhanden ist, um eine Ähnlichkeitsbewertung für das jeweilige Polygon zu erhalten;
Auswählen, durch das PCRES über den einen oder die mehreren Hardwareprozessoren, mindestens eines Polygons aus der Bibliothek von Polygonen basierend auf der Ähnlichkeitsbewertung;
Zugreifen, durch das PCRES über den einen oder die mehreren Hardwareprozessoren, auf die vorverarbeiteten historischen Daten, die dem mindestens einen ausgewählten Polygon zugeordnet sind; und
Schätzen, durch das PCRES über den einen oder die mehreren Hardwareprozessoren, der Zeit für die nächste Druckänderung basierend auf den vorverarbeiteten historischen Daten, die dem mindestens einen ausgewählten Polygon zugeordnet sind.

**6.** Prozessorimplementiertes Verfahren nach Anspruch 5, wobei der Schritt des Erzeugens, durch das PCRES über den einen oder die mehreren Hardwareprozessoren, des Polygons für jeden Rotationsschneider der Mehrzahl von Rotationsschneidern, um die Bibliothek von Polygonen unter Verwendung eines Polygonbaualgorithmus zu erzeugen, umfasst:

Verbinden, durch das PCRES über den einen oder die mehreren Hardwareprozessoren, des oberen Grenzvertrauensintervalls und des unteren Grenzvertrauensintervalls, die für jeden Rotationsschneider bestimmt wurden, auf eine zeitinstanzweise Weise, um ein oder mehrere verbundene obere Grenzvertrauensintervalle und ein oder mehrere verbundene untere Grenzvertrauensintervalle für jeden Rotationsschneider zu erhalten; und
Einschließen, durch das PCRES über den einen oder die mehreren Hardwareprozessoren, des einen oder der mehreren verbundenen oberen Grenzvertrauensintervalle und des einen oder der mehreren verbundenen unteren Grenzvertrauensintervalle, die für jeden Rotationsschneider erhalten wurden, um das Polygon für den jeweiligen Rotationsschneider zu erzeugen.

**7.** Druckänderungsanforderungs-Schätzsystem (200), umfassend:

einen Speicher (208), der Anweisungen speichert;
eine oder mehrere Kommunikationsschnittstellen (210); und
einen oder mehrere Hardwareprozessoren (206), die mit dem Speicher (208) über die eine oder die mehreren Kommunikationsschnittstellen (210) gekoppelt sind, wobei der eine oder die mehreren Hardwareprozessoren (206) durch die Anweisungen konfiguriert sind zum:

Empfangen

(a) historischer Rotationsschneider-Nutzungsdaten, die einem Rotationsschneider zugeordnet sind, wobei die Rotationsschneider-Nutzungsdaten Folgendes umfassen:

eine oder mehrere diskrete Variablen, die ein Objekt kennzeichnen, das durch den Rotationsschneider geschnitten wird, und
eine oder mehrere kontinuierliche Variablen, die dem Rotationsschneider zugeordnet sind, wobei die eine oder mehreren kontinuierlichen Variablen eines oder mehrere von zeitbezogenen Druckdaten, einer Anzahl von Malen, die der Rotationsschneider verwendet wurde, und Herstellerinformationen, die dem Rotationsschneider zugeordnet sind, umfassen, und wobei die zeitbezogenen Druckdaten Zeitdetails umfassen, wenn ein auf den Rotationsschneider ausgeübter Druck geändert wurde,

(b) einen Echtzeit-Druckwert, der auf den Rotationsschneider ausgeübt wird, und
(c) historische Daten, die jedem Rotationsschneider einer Mehrzahl von Rotationsschneidern zugeordnet sind, wobei die historischen Trenddaten historische Trends umfassen, die einen Verlust der Schneideigenschaft jedes Rotationsschneiders kennzeichnen;

Schätzen einer minimalen Nutzungsgrenze und einer maximalen Nutzungsgrenze für den Rotationsschneider bei dem Echtzeit-Druckwert basierend zumindest teilweise auf den historischen Rotationsschneider-Nutzungsdaten und dem Echtzeit-Druckwert unter Verwendung eines ersten trainierten Modells;
Überwachen von Echtzeit-Rotationsschneider-Nutzungsdaten, um zu bestimmen, ob die minimale Nutzungsgrenze für den Rotationsschneider erreicht wurde, wobei die Echtzeit-Rotationsschneider-Nutzungsdaten in Echtzeit von einer Maschine empfangen werden, die den Rotationsschneider umfasst;
beim Bestimmen, dass die minimale Nutzungsgrenze für den Rotationsschneider erreicht wurde, Schätzen einer Zeit für eine nächste Druckänderung basierend auf einem oder mehreren physikalischen Parametern des Rotationsschneiders unter Verwendung eines zweiten trainierten Modells, wobei der eine oder die mehreren physikalischen Parameter basierend auf den Echtzeit-Rotationsschneider-Nutzungsdaten bestimmt werden;
Vergleichen der geschätzten Zeit mit der geschätzten maximalen Nutzungsgrenze für den Rotationsschneider; und
Anzeigen einer Nachricht an einen Benutzer der Maschine basierend auf dem Vergleich, wobei die Nachricht eine Benachrichtigung umfasst, um den auf den Rotationsschneider ausgeübten Druck innerhalb der geschätzten Zeit zu ändern.

**8.** System nach Anspruch 7, wobei das System ferner veranlasst wird zum:

Bestimmen eines Rotationsschneider-Nutzungsindex basierend auf den historischen Rotationsschneider-Nutzungsdaten, die einem Rotationsschneider zugeordnet sind;
Berechnen eines zu ändernden Druckbetrags basierend zumindest teilweise auf dem Rotationsschneider-Nutzungsindex und dem Echtzeit-Druckwert;
Berechnen eines nächsten Druckwerts für den Rotationsschneider basierend auf dem zu ändernden Druckbetrag und dem Echtzeit-Druckwert unter Verwendung einer vordefinierten Druckberechnungsformel; und
Anzeigen des nächsten Druckwerts für den Rotationsschneider für den Benutzer der Maschine.

**9.** System nach Anspruch 8, wobei das System ferner veranlasst wird zum:
Aktualisieren des Echtzeit-Druckwerts, der auf den Rotationsschneider ausgeübt wird, auf den nächsten Druckwert.

**10.** System nach Anspruch 7, wobei zum Schätzen einer minimalen Nutzungsgrenze und einer maximalen Nutzungsgrenze für den Rotationsschneider bei dem Echtzeit-Druckwert basierend zumindest teilweise auf den historischen Rotationsschneider-Nutzungsdaten und dem Echtzeit-Druckwert unter Verwendung eines ersten trainierten Modells das System ferner veranlasst wird zum:

Identifizieren eines oder mehrerer Ereignisse, bei denen ein auf den Rotationsschneider ausgeübter Druck geändert wird, basierend auf den historischen Rotationsschneider-Nutzungsdaten, wobei jedes Ereignis des einen oder der mehreren Ereignisse einem Druckwert zugeordnet ist;
Definieren der Nutzung des Rotationsschneiders für jedes Ereignis des einen oder der mehreren Ereignisse, wobei die Nutzung eines Ereignisses Zeitdetails beinhaltet, für die der Rotationsschneider bei einem jeweiligen Druckwert arbeitet;
Erzeugen eines statistischen Bereichs, der eine minimale Grenze und eine maximale Grenze der Nutzung des Rotationsschneiders bei jedem Ereignis des einen oder der mehreren Ereignisse definiert; und
Schätzen der minimalen Nutzungsgrenze und der maximalen Nutzungsgrenze für den Rotationsschneider bei dem Echtzeit-Druckwert basierend zumindest teilweise auf dem statistischen Bereich und dem Echtzeit-Druckwert.

**11.** System nach Anspruch 7, wobei zum Schätzen der Zeit für die nächste Druckänderung basierend auf einem oder mehreren physikalischen Parametern des Rotationsschneiders unter Verwendung des zweiten trainierten Modells das System ferner veranlasst wird zum:

Vorverarbeiten der historischen Daten, die jedem Rotationsschneider zugeordnet sind, um vorverarbeitete historische Daten für den jeweiligen Rotationsschneider zu erhalten;
Durchführen einer druckweisen Trennung der vorverarbeiteten historischen Daten, die jedem Rotationsschneider der Mehrzahl von Rotationsschneidern zugeordnet sind, um getrennte Daten für den jeweiligen Rotationsschneider zu erhalten;
Bestimmen eines oberen Grenzvertrauensintervalls und eines unteren Grenzvertrauensintervalls für jede Instanz jedes Rotationsschneiders der Mehrzahl von Rotationsschneidern basierend auf den getrennten Daten, die für den jeweiligen Rotationsschneider erhalten wurden, und für jede Instanz des Rotationsschneiders basierend auf den Echtzeit-Rotationsschneider-Nutzungsdaten unter Verwendung einer statistischen Technik;
Erzeugen eines Polygons für jeden Rotationsschneider der Mehrzahl von Rotationsschneidern, um eine Bibliothek von Polygonen und ein Rotationsschneider-Polygon für den Rotationsschneider unter Verwendung eines Polygonbaualgorithmus zu erzeugen, wobei das Polygon für jeden Rotationsschneider der Mehrzahl von Rotationsschneidern und den Rotationsschneider basierend auf dem oberen Grenzvertrauensintervall und dem unteren Grenzvertrauensintervall erzeugt wird, die für den jeweiligen Rotationsschneider bestimmt wurden;
Vergleichen des Rotationsschneider-Polygons mit jedem Polygon, das in der Bibliothek von Polygonen vorhanden ist, um eine Ähnlichkeitsbewertung für das jeweilige Polygon zu erhalten;
Auswählen mindestens eines Polygons aus der Bibliothek von Polygonen basierend auf der Ähnlichkeitsbewertung;
Zugreifen auf die vorverarbeiteten historischen Daten, die dem mindestens einen ausgewählten Polygon zugeordnet sind; und
Schätzen der Zeit für die nächste Druckänderung basierend auf den vorverarbeiteten historischen Daten, die dem mindestens einen ausgewählten Polygon zugeordnet sind.

**12.** System nach Anspruch 11, wobei, um das Polygon für jeden Rotationsschneider der Mehrzahl von Rotationsschneidern zu erzeugen, um die Bibliothek von Polygonen unter Verwendung des Polygonbaualgorithmus zu erzeugen, das System ferner veranlasst wird zum:

Verbinden des oberen Grenzvertrauensintervalls und des unteren Grenzvertrauensintervalls, die für jeden Rotationsschneider bestimmt wurden, auf eine zeitinstanzweise Weise, um ein oder mehrere verbundene obere Grenzvertrauensintervalle und ein oder mehrere verbundene untere Grenzvertrauensintervalle für jeden Rotationsschneider zu erhalten; und
Einschließen des einen oder der mehreren verbundenen oberen Grenzvertrauensintervalle und des einen oder der mehreren verbundenen unteren Grenzvertrauensintervalle, die für jeden Rotationsschneider erhalten wurden, um das Polygon für den jeweiligen Rotationsschneider zu erzeugen.

**13.** Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, veranlassen zum:

Empfangen, durch ein Druckänderungsanforderungs-Schätzsystem (PCRES),

(a) historischer Rotationsschneider-Nutzungsdaten, die einem Rotationsschneider zugeordnet sind, wobei die Rotationsschneider-Nutzungsdaten Folgendes umfassen:

eine oder mehrere diskrete Variablen, die ein Objekt kennzeichnen, das durch den Rotationsschneider geschnitten wird, und
eine oder mehrere kontinuierliche Variablen, die dem Rotationsschneider zugeordnet sind, wobei die eine oder mehreren kontinuierlichen Variablen eines oder mehrere von zeitbezogenen Druckdaten, einer Anzahl von Malen, die der Rotationsschneider verwendet wurde, und Herstellerinformationen, die dem Rotationsschneider zugeordnet sind, umfassen, und wobei die zeitbezogenen Druckdaten Zeitdetails umfassen, wenn ein auf den Rotationsschneider ausgeübter Druck geändert wurde,

(b) einen Echtzeit-Druckwert, der auf den Rotationsschneider ausgeübt wird, und
(c) historische Trenddaten, die jedem Rotationsschneider einer Mehrzahl von Rotationsschneidern zugeordnet sind, wobei die historischen Trenddaten historische Trends umfassen, die einen Verlust der Schneideigenschaft jedes Rotationsschneiders kennzeichnen;

Schätzen, durch das PCRES, einer minimalen Nutzungsgrenze und einer maximalen Nutzungsgrenze für den Rotationsschneider bei dem Echtzeit-Druckwert basierend zumindest teilweise auf den historischen Rotationsschneider-Nutzungsdaten und dem Echtzeit-Druckwert unter Verwendung eines ersten trainierten Modells;
Überwachen, durch das PCRES, von Echtzeit-Rotationsschneider-Nutzungsdaten, um zu bestimmen, ob die minimale Nutzungsgrenze für den Rotationsschneider erreicht wurde, wobei die Echtzeit-Rotationsschneider-Nutzungsdaten in Echtzeit von einer Maschine empfangen werden, die den Rotationsschneider umfasst;
beim Bestimmen, dass die minimale Nutzungsgrenze für den Rotationsschneider erreicht wurde, Schätzen, durch das PCRES, einer Zeit für eine nächste Druckänderung basierend auf einem oder mehreren physikalischen Parametern des Rotationsschneiders unter Verwendung eines zweiten trainierten Modells, wobei der eine oder die mehreren physikalischen Parameter basierend auf den Echtzeit-Rotationsschneider-Nutzungsdaten bestimmt werden;
Vergleichen, durch das PCRES, der geschätzten Zeit mit der geschätzten maximalen Nutzungsgrenze für den Rotationsschneider; und
Anzeigen, durch das PCRES, einer Nachricht an einen Benutzer der Maschine basierend auf dem Vergleich, wobei die Nachricht eine Benachrichtigung umfasst, um den auf den Rotationsschneider ausgeübten Druck innerhalb der geschätzten Zeit zu ändern.

**14.** Ein oder mehrere nichtflüchtige maschinenlesbare Informationsspeichermedien nach Anspruch 13, wobei die eine oder die mehreren Anweisungen, die, wenn sie von dem einen oder den mehreren Hardwareprozessoren ausgeführt werden, ferner veranlassen zum:

Bestimmen, durch das PCRES, eines Rotationsschneider-Nutzungsindex basierend auf den historischen Rotationsschneider-Nutzungsdaten, die einem Rotationsschneider zugeordnet sind; und
Berechnen, durch das PCRES, eines zu ändernden Druckbetrags basierend zumindest teilweise auf dem Rotationsschneider-Nutzungsindex und dem Echtzeit-Druckwert;
Berechnen, durch das PCRES, eines nächsten Druckwerts für den Rotationsschneider basierend auf dem zu ändernden Druckbetrag und dem Echtzeit-Druckwert unter Verwendung einer vordefinierten Druckberechnungsformel; und
Anzeigen, durch das PCRES, des nächsten Druckwerts für den Rotationsschneider für den Benutzer der Maschine.

**15.** Ein oder mehrere nichtflüchtige maschinenlesbare Informationsspeichermedien nach Anspruch 14, wobei die eine oder die mehreren Anweisungen, die, wenn sie von dem einen oder den mehreren Hardwareprozessoren ausgeführt werden, ferner veranlassen zum:
Aktualisieren, durch das PCRES über den einen oder die mehreren Hardwareprozessoren, des Echtzeit-Druckwerts, der auf den Rotationsschneider ausgeübt wird, auf den nächsten Druckwert.

## Revendications

**1.** Procédé mis en œuvre par processeur (400), comprenant :

la réception, par un système d'estimation des besoins de changement de pression (PCR) via un ou plusieurs processeurs matériels,

(a) de données historiques d'utilisation d'un cutter rotatif associées à cutter rotatif, dans lequel les données d'utilisation du cutter rotatif comprennent :

une ou plusieurs variables discrètes signifiant un objet coupé par le cutter rotatif, et
une ou plusieurs variables continues associées au cutter rotatif, dans lequel la ou les variables continues comprennent une ou plusieurs données de pression temporelle, un nombre d'utilisations du cutter rotatif, et des informations du fabricant associées au cutter rotatif, et dans lequel les données de pression temporelle comprennent des détails temporels lorsqu'une pression appliquée sur le cutter rotatif a changée,

(b) une valeur de pression en temps réel appliquée au cutter rotatif, et
(c) des données historiques associées à chaque cutter rotatif parmi une pluralité de cutters rotatifs, dans lequel les données historiques comprennent des tendances historiques signifiant une perte de la propriété de coupe de chaque cutter rotatif (402) ; l'estimation, par le PCR via le un les processeurs matériels, d'une limite d'utilisation minimale et d'une limite d'utilisation maximale pour le cutter rotatif à la valeur de pression en temps réel basée, au moins en partie, sur les données historiques d'utilisation du cutter rotatif et la valeur de pression en temps réel en utilisant un premier modèle entraîné (404) ;

la surveillance, par le PCR via le ou les processeurs matériels, de données d'utilisation en temps réel du cutter rotatif pour déterminer si la limite d'utilisation minimale a été atteinte pour le cutter rotatif, dans lequel les données d'utilisation en temps réel du cutter rotatif sont reçues en temps réel à partir d'une machine comprenant le cutter rotatif (406) ;
lors de la détermination que la limite d'utilisation minimale a été atteinte pour le cutter rotatif, l'estimation, par le PCR via le ou les processeurs matériels, d'un moment pour un prochain changement de pression basé sur un ou plusieurs paramètres physiques du cutter rotatif en utilisant un deuxième modèle entraîné, dans lequel le ou les paramètres physiques sont déterminés sur la base des données d'utilisation en temps réel du cutter rotatif (408) ;
la comparaison, par le PCR via le ou les processeurs matériels, du temps estimé avec la limite d'utilisation maximale estimée pour le cutter rotatif (410) ; et
l'affichage, par le PCR via le ou les processeurs matériels, d'un message à un utilisateur de la machine sur la base de la comparaison, dans lequel le message comprend une notification pour changer la pression appliquée sur le cutter rotatif dans le temps estimé (412).

2. Procédé mis en œuvre par processeur selon la revendication 1, comprenant en outre :

la détermination, par le PCR via le ou les processeurs matériels, d'un indice d'utilisation du cutter rotatif sur la base des données historiques d'utilisation du cutter rotatif associées à un cutter rotatif ; et
le calcul, par le PCR via le ou les processeurs matériels, d'une quantité de pression à changer basé, au moins en partie, sur l'indice d'utilisation du cutter rotatif et la valeur de pression en temps réel ;
le calcul, par le PCR via le ou les processeurs matériels, d'une valeur de pression suivante pour le cutter rotatif sur la base de la quantité de pression à changer et de la valeur de pression en temps réel en utilisant une formule prédéfinie de calcul de pression; et
l'affichage, par le PCR via le ou les processeurs matériels, de la valeur de pression suivante pour le cutter rotatif à l'utilisateur de la machine.

3. Procédé mis en œuvre par processeur selon la revendication 2, comprenant en outre :
la mise à jour, par le PCR via le ou les processeurs matériels, de la valeur de pression en temps réel qui est appliquée au cutter rotatif à la valeur de pression suivante.

4. Procédé mis en œuvre par processeur selon la revendication 1, dans lequel l'étape d'estimation, par le PCR via les ou les processeurs matériels, de la limite d'utilisation minimale et de la limite d'utilisation maximale pour le cutter rotatif à la valeur de pression en temps réel basées, au moins en partie, sur des données historiques d'utilisation du cutter rotatif et la valeur de pression en temps réel en utilisant le premier modèle entraîné comprend :

l'identification, par le PCR via le ou les processeurs matériels, d'un ou plusieurs événements lors desquels une pression appliquée au cutter rotatif est changée sur la base des données d'utilisation du cutter rotatif, dans lequel chaque événement parmi lesdits événements est associé à une valeur de pression ;
la définition, par le PCR via le ou les processeurs matériels, d'une utilisation du cutter rotatif pour chaque événement des un ou plusieurs événements parmi lesdits événements, dans lequel l'utilisation d'un événement inclut des détails temporels pour lesquels le cutter rotatif fonctionne à une valeur de pression respective ;
la génération, par le PCR via le ou les processeurs matériels, d'une plage statistique définissant une limite minimale et une limite maximale de l'utilisation du cutter rotatif pour chaque événement parmi lesdits événements ; et
l'estimation, par le PCR via le ou les processeurs matériels, de la limite d'utilisation minimale et de la limite d'utilisation maximale pour le cutter rotatif à la valeur de pression en temps réel basée, au moins en partie, sur la plage statistique et la valeur de pression en temps réel.

**5.** Procédé mis en œuvre par processeur selon la revendication 1, dans lequel l'étape d'estimation, par le PCR via le ou les processeurs matériels, du temps pour le changement de pression suivant sur la base d'un ou plusieurs paramètres physiques du cutter rotatif en utilisant le deuxième modèle entraîné comprend :

le prétraitement, par le PCR via le ou les processeurs matériels, des données historiques associées à chaque cutter rotatif pour obtenir des données historiques prétraitées pour le cutter rotatif respectif ;
la réalisation, par le PCR via le ou les processeurs matériels, d'une ségrégation des données prétraitées en fonction des pressions appliquées pour chaque cutter rotatif parmi la pluralité de cutters rotatifs pour obtenir des données ségrégées pour le cutter rotatif respectif ;
la détermination, par le PCR via le ou les processeurs matériels, d'un intervalle de confiance de limite supérieure et d'un intervalle de confiance de limite inférieure pour chaque instance de chaque cutter rotatif parmi la pluralité de cutters rotatifs sur la base des données ségrégées obtenues pour le cutter rotatif respectif, et pour chaque instance du cutter rotatif sur la base des données d'utilisation du cutter rotatif en temps réel en utilisant une technique statistique ;
la création, par le PCR via le ou les processeurs matériels, d'un polygone pour chaque cutter rotatif parmi la pluralité de cutters rotatifs pour créer une bibliothèque de polygones et un polygone de cutter rotatif pour le cutter rotatif à l'aide d'un algorithme de création de polygones, dans lequel le polygone pour chaque cutter rotatif parmi la pluralité de cutters rotatifs est créé sur la base de l'intervalle de confiance de limite supérieure et de l'intervalle de confiance de limite inférieure déterminés pour le cutter rotatif respectif ;
la comparaison, par le PCR via le ou les processeurs matériels, du polygone du cutter rotatif avec chaque polygone présent dans la bibliothèque de polygones pour obtenir un score de similarité pour le polygone respectif ;
la sélection, par le PCR via le ou les processeurs matériels, d'au moins un polygone à partir de la bibliothèque de polygones sur la base du score de similarité ;
l'accès, par le PCR via le ou les processeurs matériels, aux données historiques prétraitées associées à l'au moins un polygone sélectionné ; et
l'estimation, par le PCR via le ou les processeurs matériels, du temps pour le changement de pression suivant sur la base des données historiques prétraitées associées au(x) polygone(s) sélectionné(s).

**6.** Procédé mis en œuvre par processeur selon la revendication 5, dans lequel l'étape de création, par le PCR via le ou les processeurs matériels, du polygone pour chaque cutter rotatif parmi la pluralité de cutters rotatifs pour créer la bibliothèque de polygones en utilisant un algorithme de création de polygone comprend :

la connexion, par le PCR via le ou les processeurs matériels, de l'intervalle de confiance de limite supérieure et de l'intervalle de confiance de limite inférieure déterminés pour chaque cutter rotatif lié aux instances temporelles pour obtenir un ou plusieurs intervalles de confiance de limite supérieure connectés et un ou plusieurs intervalles de confiance de limite inférieure connectés pour chaque cutter rotatif ; et
l'inclusion, par le PCR via le ou les processeurs matériels, desdits intervalles de confiance de limite supérieure connectés et intervalles de confiance de limite inférieure connectés obtenus pour chaque cutter rotatif pour créer le polygone du cutter rotatif respectif.

**7.** Système d'estimation des besoins en changement de pression (200), comprenant :

une mémoire (208) stockant des instructions ;
une ou plusieurs interfaces de communication (210) ; et
un ou plusieurs processeurs matériels (206) couplés à la mémoire (208) via le ou les interfaces de communication (210), dans lequel le ou les processeurs matériels (206) sont configurés par les instructions pour :

recevoir

(a) des données historiques d'utilisation de cutter rotatif associées à un cutter rotatif, dans lequel les données d'utilisation du cutter rotatif comprennent :

une ou plusieurs variables discrètes représentant un objet coupé par le cutter rotatif, et
une ou plusieurs variables continues associées au cutter rotatif, lesdites variables continues comprennent une ou plusieurs données de pression temporelle, le nombre d'utilisations du cutter rotatif, et des informations de fabricant associées au cutter rotatif, et dans lequel les données de pression temporelle comprennent des détails temporels lorsqu'une pression appliquée au cutter rotatif a été changée,

(b) une valeur de pression en temps réel appliquée au cutter rotatif, et
(c) des données historiques associées à chaque cutter rotatif parmi une pluralité de cutters rotatifs, dans lequel les données historiques de tendances comprennent des tendances historiques indiquant une perte de propriété de coupe de chaque cutter rotatif ;

l'estimation d'une limite d'utilisation minimale et d'une limite d'utilisation maximale pour le cutter rotatif à la valeur de pression en temps réel basée, au moins en partie, sur des données historiques d'utilisation du cutter rotatif et la valeur de pression en temps réel en utilisant un premier modèle entraîné ;
la surveillance de données d'utilisation en temps réel du cutter rotatif pour déterminer si la limite d'utilisation minimale du cutter rotatif est atteinte, dans lequel les données d'utilisation en temps réel du cutter rotatif sont reçues en temps réel à partir d'une machine comprenant le cutter rotatif ;
lors de la détermination que la limite d'utilisation minimale du cutter rotatif est atteinte, l'estimation d'un temps pour un changement de pression suivant sur la base d'un ou plusieurs paramètres physiques du cutter rotatif en utilisant un deuxième modèle entraîné, dans lequel le un ou les paramètres physiques sont déterminés sur la base des données d'utilisation en temps réel du cutter rotatif ;
la comparaison du temps estimé avec la limite d'utilisation maximale estimée pour le cutter rotatif ; et
l'affichage d'un message à un utilisateur de la machine sur la base de la comparaison, dans lequel le message comprend une notification pour changer la pression appliquée au cutter rotatif dans le temps estimé.

**8.** Système selon la revendication 7, dans lequel le système est en outre conçu pour :

déterminer un indice d'utilisation du cutter rotatif sur la base des données historiques d'utilisation du cutter rotatif associées à un cutter rotatif ;
calculer une quantité de pression à changer basée, au moins en partie, sur l'indice d'utilisation du cutter rotatif et la valeur de pression en temps réel ;
calculer une valeur de pression suivante pour le cutter rotatif sur la base de la quantité de pression à changer et de la valeur de pression en temps réel en utilisant une formule de calcul de pression prédéfinie ; et
afficher la valeur de pression suivante pour le cutter rotatif à l'utilisateur de la machine.

**9.** Système selon la revendication 8, dans lequel le système est en outre conçu pour :
mettre à jour la valeur de pression en temps réel appliquée sur le cutter rotatif à la valeur de pression suivante.

**10.** Système selon la revendication 7, dans lequel pour estimer une limite d'utilisation minimale et une limite d'utilisation maximale pour le cutter rotatif à la valeur de pression en temps réel basées, au moins en partie, sur des données historiques d'utilisation du cutter rotatif et la valeur de pression en temps réel en utilisant un premier modèle entraîné, le système est en outre amené à :

identifier un ou plusieurs événements au cours desquels la pression appliquée au cutter rotatif est changée sur la base des données historiques d'utilisation du cutter rotatif, dans lequel chaque événement parmi les événements est associé à une valeur de pression ;
définir une utilisation du cutter rotatif pour chaque événement parmi les événements, dans lequel l'utilisation d'un événement inclut des détails temporels durant lesquels le cutter rotatif fonctionne à une valeur de pression respective ;
générer une plage statistique définissant une limite minimale et une limite maximale de l'utilisation du cutter rotatif à chaque événement parmi les événements ; et

estimer la limite d'utilisation minimale et la limite d'utilisation maximale pour le cutter rotatif à la valeur de pression en temps réel basée, au moins en partie, sur la plage statistique et la valeur de pression en temps réel.

**11.** Système selon la revendication 7, dans lequel pour estimer le temps pour le changement de pression suivant sur la base d'un ou plusieurs paramètres physiques du cutter rotatif en utilisant le deuxième modèle entraîné, le système est en outre conçu pour :

le prétraitement des données historiques associées à chaque cutter rotatif pour obtenir des données historiques prétraitées pour le cutter rotatif respectif ;
la réalisation d'une ségrégation des données prétraitées en fonction des pressions appliquées pour chaque cutter rotatif parmi la pluralité de cutters rotatifs pour obtenir des données ségrégées pour le cutter rotatif respectif;
la détermination d'un intervalle de confiance de limite supérieure et d'un intervalle de confiance de limite inférieure pour chaque instance de chaque cutter rotatif parmi la pluralité de cutters rotatifs sur la base des données ségrégées obtenues pour le cutter rotatif respectif, et pour chaque instance du cutter rotatif sur la base des données d'utilisation du cutter rotatif en temps réel en utilisant une technique statistique ;
la création d'un polygone pour chaque cutter rotatif parmi la pluralité de cutters rotatifs pour créer une bibliothèque de polygones et un polygone de cutter rotatif pour le cutter rotatif à l'aide d'un algorithme de création de polygones, dans lequel le polygone pour chaque cutter rotatif parmi la pluralité de cutters rotatifs est créé sur la base de l'intervalle de confiance de limite supérieure et de l'intervalle de confiance de limite inférieure déterminés pour le cutter rotatif respectif ;
la comparaison du polygone du cutter rotatif avec chaque polygone présent dans la bibliothèque de polygones pour obtenir un score de similarité pour le polygone respectif ;
la sélection, par le PCR via le ou les processeurs matériels, d'au moins un polygone à partir de la bibliothèque de polygones sur la base du score de similarité ;
l'accès données historiques prétraitées associées à l'au moins un polygone sélectionné ; et
l'estimation du temps pour le changement de pression suivant sur la base des données historiques prétraitées associées au(x) polygone(s) sélectionné(s).

**12.** Système selon la revendication 11, dans lequel pour créer le polygone pour chaque cutter rotatif parmi la pluralité de cutters rotatifs afin de créer la bibliothèque de polygones en utilisant l'algorithme de création de polygone, le système est en outre conçu pour :

la connexion de l'intervalle de confiance de limite supérieure et de l'intervalle de confiance de limite inférieure déterminés pour chaque cutter rotatif lié aux instances temporelles pour obtenir un ou plusieurs intervalles de confiance de limite supérieure connectés et un ou plusieurs intervalles de confiance de limite inférieure connectés pour chaque cutter rotatif ; et
l'inclusion desdits intervalles de confiance de limite supérieure connectés et intervalles de confiance de limite inférieure connectés obtenus pour chaque cutter rotatif pour créer le polygone du cutter rotatif respectif.

**13.** Un ou plusieurs supports de stockage d'informations lisibles par machine non transitoires comprenant une ou plusieurs instructions qui, lorsqu'elles sont exécutées par un ou plusieurs processeurs matériels, conduisent à :

la réception, par un système d'estimation des besoins de changement de pression (PCR),

(a) de données historiques d'utilisation d'un cutter rotatif associées au cutter rotatif, dans lequel les données d'utilisation du cutter rotatif comprennent :

une ou plusieurs variables discrètes signifiant un objet coupé par le cutter rotatif, et
une ou plusieurs variables continues associées au cutter rotatif, dans lequel la ou les variables continues comprennent une ou plusieurs données de pression temporelle, un nombre d'utilisations du cutter rotatif, et des informations du fabricant associées au cutter rotatif, et dans lequel les données de pression temporelle comprennent des détails temporels lorsqu'une pression appliquée sur le cutter rotatif a changé,

(b) une valeur de pression en temps réel appliquée au cutter rotatif, et
(c) des données historiques associées à chaque cutter rotatif parmi une pluralité de cutters rotatifs, dans lequel les données historiques comprennent des tendances historiques signifiant une perte de la propriété de coupe de chaque cutter rotatif ; l'estimation, par le PCR via le un les processeurs matériels, d'une limite d'utilisation minimale et d'une limite d'utilisation maximale pour le cutter rotatif à la valeur de pression en temps réel basée, au moins en partie, sur les données historiques d'utilisation du cutter rotatif et la valeur de pression en temps réel en utilisant un premier modèle entraîné ;

la surveillance, par le PCR via le ou les processeurs matériels, de données d'utilisation en temps réel du cutter rotatif pour déterminer si la limite d'utilisation minimale a été atteinte pour le cutter rotatif, dans lequel les données d'utilisation en temps réel du cutter rotatif sont reçues en temps réel à partir d'une machine comprenant le cutter rotatif ;
lors de la détermination que la limite d'utilisation minimale a été atteinte pour le cutter rotatif, l'estimation, par le PCR via le ou les processeurs matériels, d'un moment pour un prochain changement de pression basé sur un ou plusieurs paramètres physiques du cutter rotatif en utilisant un deuxième modèle entraîné, dans lequel le ou les paramètres physiques sont déterminés sur la base des données d'utilisation en temps réel du cutter rotatif ;
la comparaison, par le PCR via le ou les processeurs matériels, du temps estimé avec la limite d'utilisation maximale estimée pour le cutter rotatif ; et
l'affichage, par le PCR via le ou les processeurs matériels, d'un message à un utilisateur de la machine sur la base de la comparaison, dans lequel le message comprend une notification pour changer la pression appliquée sur le cutter rotatif dans le temps estimé.

**14.** Un ou plusieurs supports de stockage d'informations lisibles par machine non transitoires selon la revendication 13, dans lequel les une ou plusieurs instructions qui, lorsqu'elles sont exécutées par les un ou plusieurs processeurs matériels, conduisent en outre à :

la détermination, par le PCR via le ou les processeurs matériels, d'un indice d'utilisation du cutter rotatif sur la base des données historiques d'utilisation du cutter rotatif associées à un cutter rotatif ; et
le calcul, par le PCR via le ou les processeurs matériels, d'une quantité de pression à changer basé, au moins en partie, sur l'indice d'utilisation du cutter rotatif et la valeur de pression en temps réel ;
le calcul, par le PCR via le ou les processeurs matériels, d'une valeur de pression suivante pour le cutter rotatif sur la base de la quantité de pression à changer et de la valeur de pression en temps réel en utilisant une formule prédéfinie de calcul de pression; et
l'affichage, par le PCR via le ou les processeurs matériels, de la valeur de pression suivante pour le cutter rotatif à l'utilisateur de la machine.

**15.** Un ou plusieurs supports de stockage d'informations lisibles par machine non transitoires selon la revendication 14, dans lequel la ou les instructions qui, lorsqu'elles sont exécutées par le ou les processeurs matériels, conduisent en outre à :
la mise à jour, par le PCR via le ou les processeurs matériels, de la valeur de pression en temps réel qui est appliquée au cutter rotatif à la valeur de pression suivante.

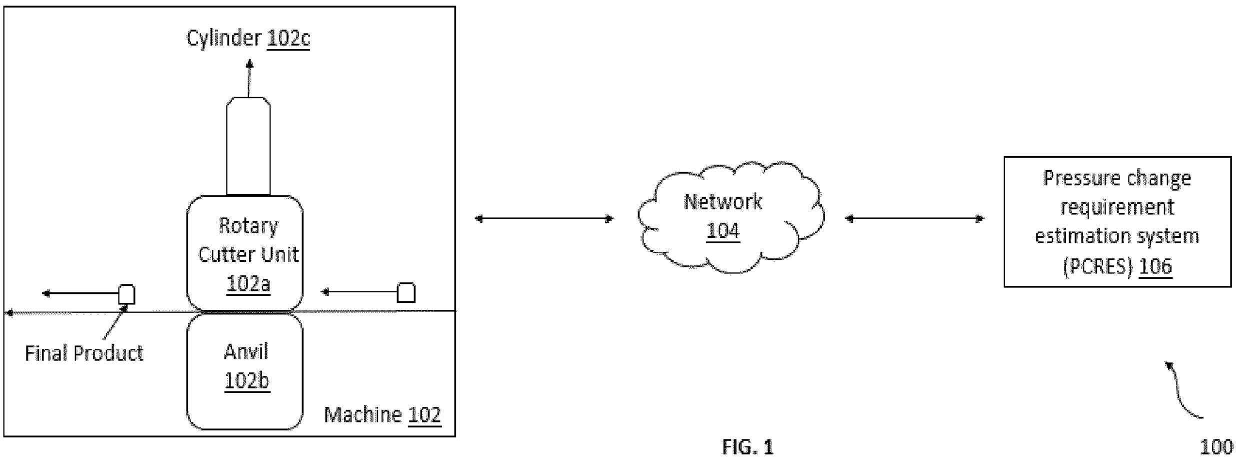

Cylinder 102c
Rotary Cutter Unit 102a
Final Product
Anvil 102b
Machine 102
Network 104
Pressure change requirement estimation system (PCRES) 106
100


FIG. 1

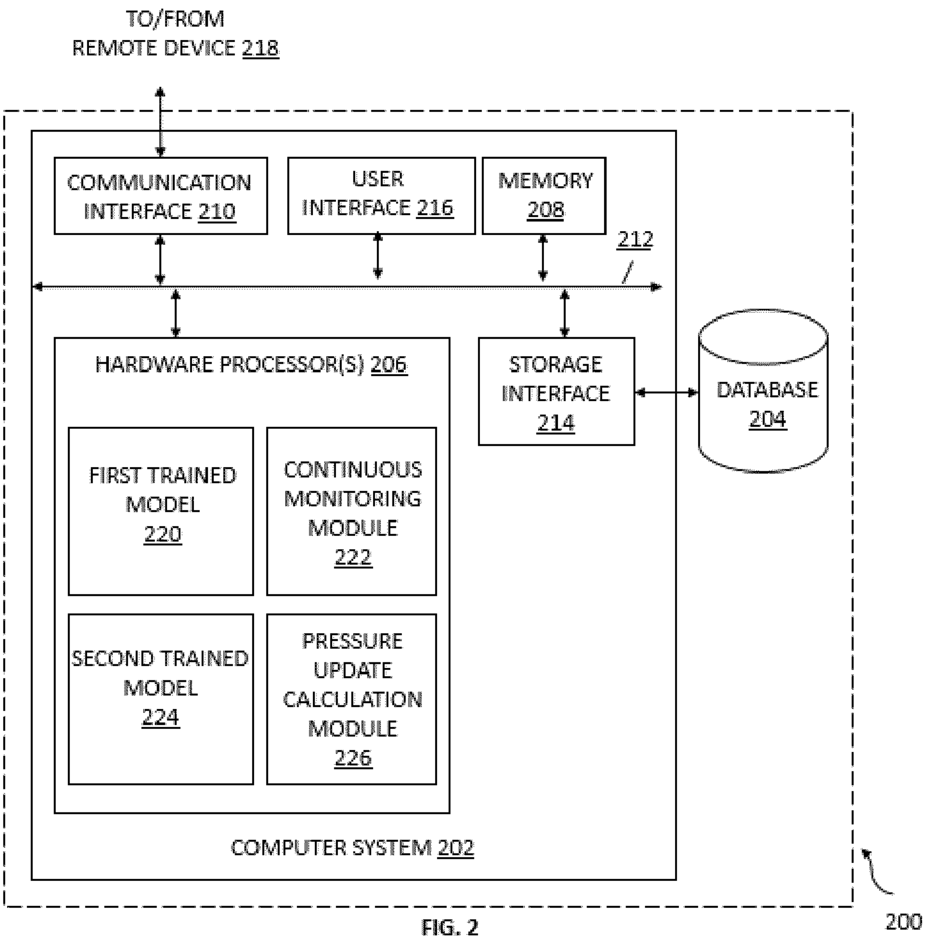
TO/FROM
REMOTE DEVICE 218
COMMUNICATION INTERFACE 210
USER INTERFACE 216
MEMORY 208
212
HARDWARE PROCESSOR(S) 206
STORAGE INTERFACE 214
DATABASE 204
FIRST TRAINED MODEL 220
CONTINUOUS MONITORING MODULE 222
SECOND TRAINED MODEL 224
PRESSURE UPDATE CALCULATION MODULE 226
COMPUTER SYSTEM 202
200

FIG. 2

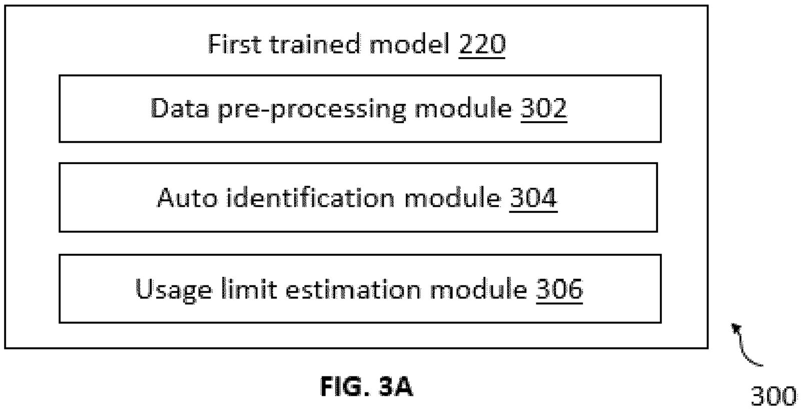
First trained model 220
Data pre-processing module 302
Auto identification module 304
Usage limit estimation module 306
300

FIG. 3A

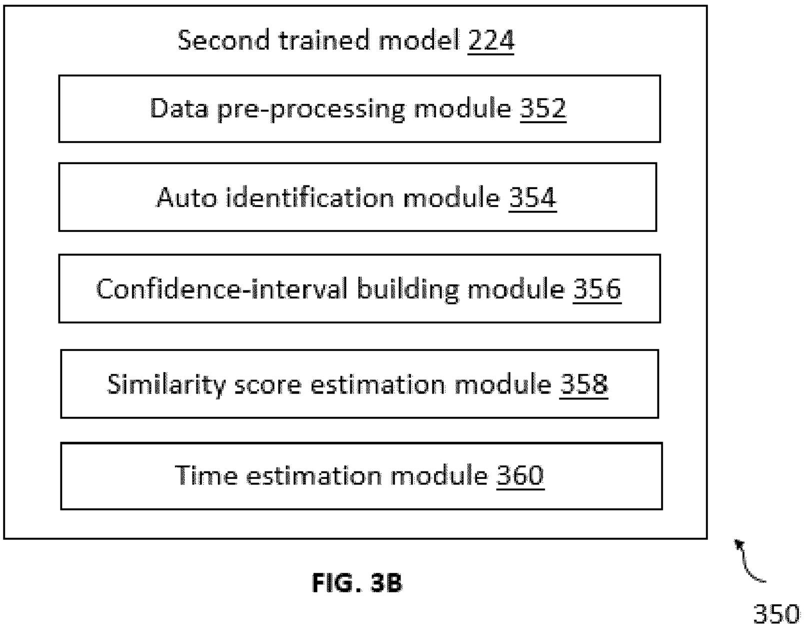
Second trained model 224
Data pre-processing module 352
Auto identification module 354
Confidence-interval building module 356
Similarity score estimation module 358
Time estimation module 360
350

FIG. 3B

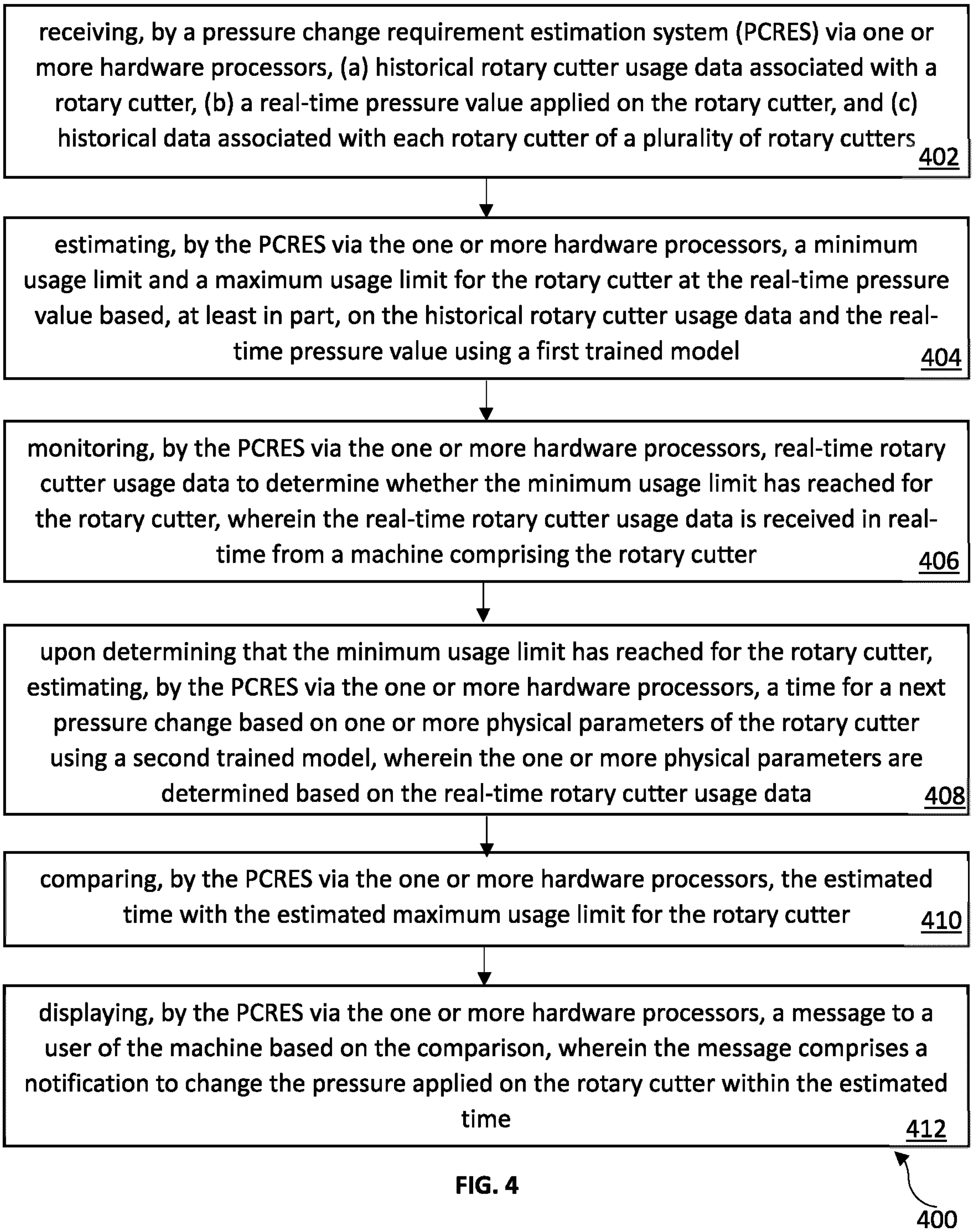
receiving, by a pressure change requirement estimation system (PCRES) via one or more hardware processors, (a) historical rotary cutter usage data associated with a rotary cutter, (b) a real-time pressure value applied on the rotary cutter, and (c) historical data associated with each rotary cutter of a plurality of rotary cutters
402
estimating, by the PCRES via the one or more hardware processors, a minimum usage limit and a maximum usage limit for the rotary cutter at the real-time pressure value based, at least in part, on the historical rotary cutter usage data and the real-time pressure value using a first trained model
404
monitoring, by the PCRES via the one or more hardware processors, real-time rotary cutter usage data to determine whether the minimum usage limit has reached for the rotary cutter, wherein the real-time rotary cutter usage data is received in real-time from a machine comprising the rotary cutter
406
upon determining that the minimum usage limit has reached for the rotary cutter, estimating, by the PCRES via the one or more hardware processors, a time for a next pressure change based on one or more physical parameters of the rotary cutter using a second trained model, wherein the one or more physical parameters are determined based on the real-time rotary cutter usage data
408
comparing, by the PCRES via the one or more hardware processors, the estimated time with the estimated maximum usage limit for the rotary cutter
410
displaying, by the PCRES via the one or more hardware processors, a message to a user of the machine based on the comparison, wherein the message comprises a notification to change the pressure applied on the rotary cutter within the estimated time
412
400

FIG. 4

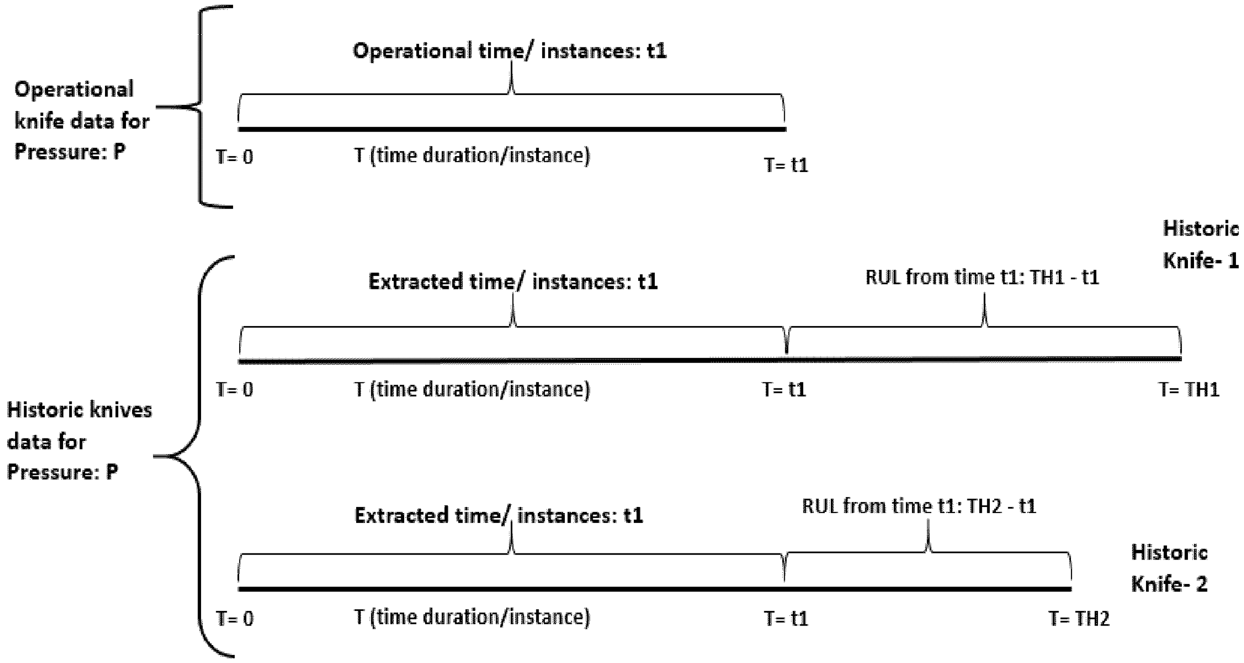
Operational knife data for Pressure: P
Operational time/ instances: t1
T= 0
T (time duration/instance)
T= t1
Historic Knife- 1
Extracted time/ instances: t1
RUL from time t1: TH1 - t1
T= 0
T (time duration/instance)
T= t1
T= TH1
Historic knives data for Pressure: P
Extracted time/ instances: t1
RUL from time t1: TH2 - t1
Historic Knife- 2
T= 0
T (time duration/instance)
T= t1
T= TH2

FIG. 5

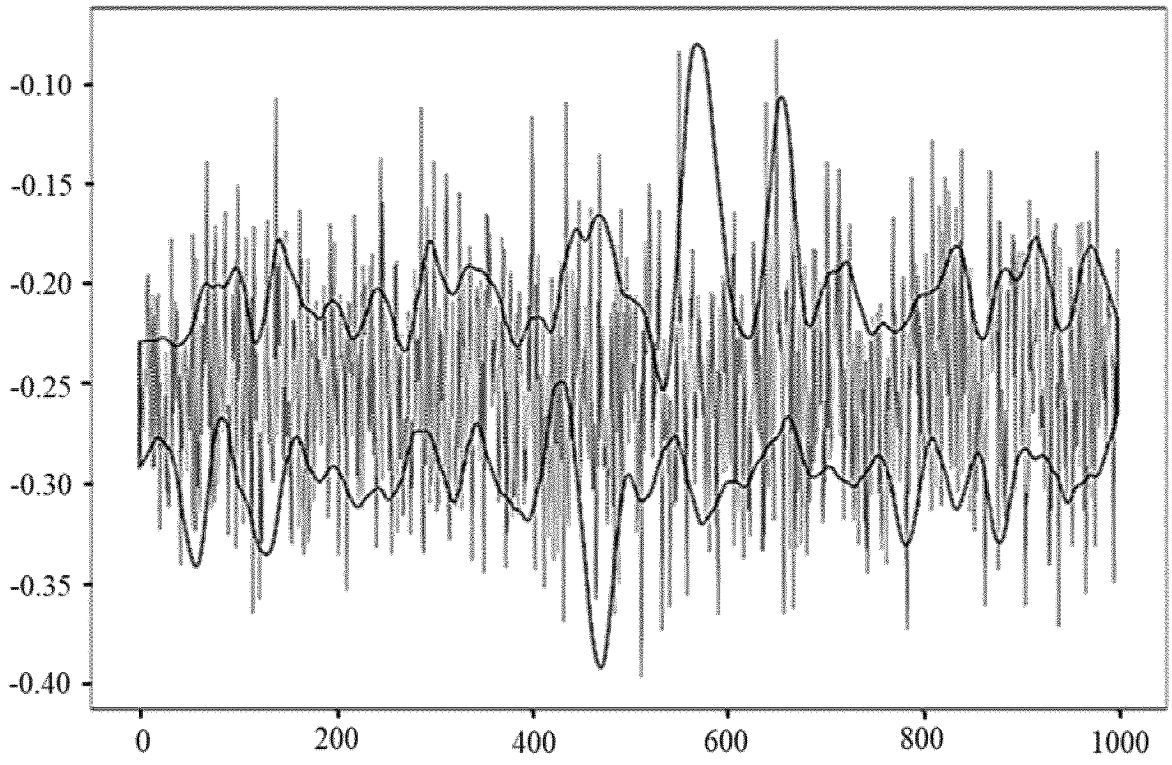


FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- IN 202121062051
- US 2018085877 A
- US 6418828 B